# EUROPEAN PATENT APPLICATION

(11) **EP 4 727 103 A1**
(43) Date of publication of application: **15.04.2026**
(21) Application number: 25741591.9
(22) Date of filing: 16.01.2025
(51) Int. Cl.: H04M 1/724, G06F 3/0481

(54) **APPLICATION MANAGEMENT METHOD, ELECTRONIC DEVICE, AND STORAGE MEDIUM**

(30) Priority: 18.01.2024 CN 202410075031; 30.03.2024 CN 202410385942
(71) Applicant: Huawei Technologies Co., Ltd., Shenzhen, Guangdong 518129 (CN)
(72) Inventor: LIU, Siyuan, Shenzhen, Guangdong 518129 (CN); FENG, Yu, Shenzhen, Guangdong 518129 (CN)
(74) Representative: Grünecker Patent- und Rechtsanwälte PartG mbB
(86) International application number: PCT/CN2025/072859
(87) International publication number: WO 2025/153030

(57) **Abstract**

This application provides an application management method, an electronic device, and a storage medium. An electronic device displays a first user interface, where a first floating window of a first application hovers over the first user interface. The electronic device receives a first operation. The electronic device displays a multi-task management interface in response to the first operation, where the multi-task management interface includes a first display region and a second display region, the first display region includes a first task window of a second application, the second display region includes a second task window of the first application, and an application type of the first application includes a full-screen application and/or a split-screen application. According to the method, the electronic device may divide the multi-task management interface into two regions, and task windows of applications of different application types are displayed in different regions, so that a user can conveniently manage applications of different types on the multi-task management interface.

## Description

This application claims priorities to Chinese Patent Application No. 202410075031.7, filed with the China National Intellectual Property Administration on January 18, 2024 and entitled "MULTI-TASK MANAGEMENT METHOD, ELECTRONIC DEVICE, AND STORAGE MEDIUM", and to Chinese Patent Application No. 202410385942.X, filed with the China National Intellectual Property Administration on March 30, 2024 and entitled "APPLICATION MANAGEMENT METHOD, ELECTRONIC DEVICE, AND STORAGE MEDIUM", both of which are incorporated herein by reference in their entireties.

### TECHNICAL FIELD

This application relates to the field of terminal technologies, and in particular, to an application management method, an electronic device, and a storage medium.

### BACKGROUND

With development of terminal technologies, an increasing quantity of applications are installed on an electronic device, and a user may take a photo/record a video, watch a movie or television series, listen to music, make a call, and the like by using the applications installed on the electronic device. This greatly improves user experience.

The user may simultaneously start a plurality of applications on the electronic device, and the user may view and manage the plurality of started applications in a task management center. How to provide a convenient and multi-functional management method for the task management center is to be further studied.

### SUMMARY

This application provides an application management method, an electronic device, and a storage medium, to improve operation convenience of a task management center and improve user experience.

According to a first aspect, this application provides an application management method. The method includes: An electronic device displays a first user interface, where a first floating window of a first application hovers over the first user interface. The electronic device receives a first operation. The electronic device displays a multi-task management interface in response to the first operation, where the multi-task management interface includes a first display region and a second display region, the first display region includes a first task window of a second application, the second display region includes a second task window of the first application, and an application type of the first application includes a full-screen application and/or a split-screen application.

The first user interface may be a desktop, or may be an application interface in an application.

According to the method, the electronic device may divide the multi-task management interface into two regions, and task windows of applications of different application types are displayed in different regions, so that a user can conveniently manage applications of different types on the multi-task management interface.

With reference to the first aspect, in a possible implementation, the first display region and the second display region do not overlap.

With reference to the first aspect, in a possible implementation, a window style of the first task window is different from a window style of the second task window, and the window style includes one or more of the following: a window size, a window shape, a window color, window transparency, and window corner rounding.

With reference to the first aspect, in a possible implementation, the first user interface includes the desktop or a user interface in a third application.

With reference to the first aspect, in a possible implementation, after the electronic device receives the first operation, and before the electronic device displays the multi-task management interface, the method further includes: The electronic device plays a first animation, where the first animation includes a plurality of frames of images.

In this way, after the electronic device receives a user operation and enters the multi-task management interface, and before the electronic device displays the multi-task management interface, the electronic device may play an animation, to improve visual effect for a user.

With reference to the first aspect, in a possible implementation, after the electronic device displays the multi-task management interface, the method further includes: The electronic device stops displaying the first floating window.

After the electronic device displays the multi-task management interface, the electronic device may stop displaying the first floating window.

In some embodiments, after the electronic device displays the multi-task management interface, the electronic device may continue to make the first floating window hover over the multi-task management interface.

With reference to the first aspect, in a possible implementation, after the electronic device displays the multi-task management interface, the method further includes: The electronic device receives a second operation of a user for the second task window. The electronic device displays a second user interface in response to the second operation, where the first floating window hovers over the second user interface.

The second user interface may be the same as or different from the first user interface.

In this way, after the electronic device displays the multi-task management interface, the electronic device may receive an operation of the user for a task window of a floating application, so that the electronic device continues to make the first floating window hover in the foreground.

With reference to the first aspect, in a possible implementation, the second display region further includes a third task window of the third application. After the electronic device displays the multi-task management interface, the method further includes: The electronic device receives a third operation of a user for the third task window. The electronic device displays a second user interface in response to the third operation, where the first floating window and a second floating window of the third application hover over the second user interface.

In this way, after the electronic device displays the multi-task management interface, the electronic device may receive an operation of the user for a task window of a floating application, so that the electronic device makes a plurality of floating windows hover in the foreground, for example, makes both the first floating window and the second floating window hover in the foreground.

With reference to the first aspect, in a possible implementation, the second display region further includes a third task window of the third application. After the electronic device displays the multi-task management interface, the method further includes: The electronic device receives a third operation of a user for the third task window. The electronic device displays a second user interface in response to the third operation, where a second floating window of the third application hovers over the second user interface, and the first floating window is not displayed on the second user interface.

In this way, after the electronic device displays the multi-task management interface, the electronic device may receive an operation of the user for a task window of a floating application, so that the electronic device switches a floating window hovering in the foreground, for example, switches the floating window hovering in the foreground from the first floating window to the second floating window.

With reference to the first aspect, in a possible implementation, a second floating window of the third application further hover over the first user interface, the first floating window is located above the second floating window, and the second display region further includes a third task window of the third application. After the electronic device displays the multi-task management interface, the method further includes: The electronic device receives a third operation of a user for the third task window. The electronic device displays a second user interface in response to the third operation, where the second floating window and the first floating window hover over the second user interface, and the second floating window is located above the first floating window.

In this way, after the electronic device displays the multi-task management interface, the electronic device may receive an operation of the user for a task window of a floating application, so that the electronic device switches a focused floating window hovering in the foreground. The focused floating window is a floating window on which the user currently can perform an operation, for example, moving the focused floating window.

With reference to the first aspect, in a possible implementation, a second floating window of the third application further hover over the first user interface, the first floating window is located above the second floating window, and the second display region further includes a third task window of the third application and a fourth task window of a fourth application. After the electronic device displays the multi-task management interface, the method further includes: The electronic device receives a fourth operation of a user for the fourth task window. The electronic device displays a second user interface in response to the fourth operation, where a third floating window of the fourth application and the first floating window hover over the second user interface, and the third floating window is located above the first floating window.

In this way, after the electronic device displays the multi-task management interface, when the electronic device can simultaneously display two floating windows in the foreground, the electronic device may receive an operation of the user for a task window of a floating application, so that the electronic device switches between two different floating windows displayed in the foreground.

With reference to the first aspect, in a possible implementation, after the electronic device displays the multi-task management interface, the method further includes: The electronic device receives a fifth operation of a user for the first task window. The electronic device displays a third user interface of the second application in response to the fifth operation.

Optionally, after the electronic device displays the third user interface of the second application, the electronic device may continue to make the first floating window hover over the third user interface. Optionally, after the electronic device displays the third user interface of the second application, the electronic device may alternatively not display the first floating window.

With reference to the first aspect, in a possible implementation, after the electronic device displays the multi-task management interface, the method further includes: The electronic device receives a sixth operation, where the sixth operation is a user operation for stopping displaying the multi-task management interface. The electronic device displays the desktop in response to the sixth operation.

In a possible implementation, the sixth operation is an operation performed on a blank region on the multi-task management interface.

The sixth operation is not limited to the operation performed on the blank region on the multi-task management interface, and may alternatively be another operation, for example, a swipe operation performed on the multi-task management interface.

In this way, after the electronic device stops displaying the multi-task management interface, the electronic device may stop displaying another user interface and another floating window, and display only the desktop. Optionally, after the electronic device stops displaying the multi-task management interface, the electronic device may continue to display another user interface and/or another floating window.

With reference to the first aspect, in a possible implementation, after the electronic device displays the first floating window, the method further includes: The electronic device receives a seventh operation for the first floating window, where the seventh operation is a user operation for stopping making the first floating window hover over the second user interface. The electronic device continues to display the second task window in the second display region in response to the seventh operation.

In this way, after the electronic device receives a user operation and stops displaying the first floating window in the foreground, the second task window of the first application is still displayed on the multi-task management interface, that is, a process of the first application is not closed.

With reference to the first aspect, in a possible implementation, after the electronic device displays the multi-task management interface, the method further includes: The electronic device receives an eighth operation on the second task window, where the eighth operation is a user operation for deleting the second task window. The electronic device closes a process of the second application in response to the eighth operation.

In this way, after the electronic device receives a user operation and deletes the second task window on the multi-task management interface, the electronic device also closes the process of the first application.

With reference to the first aspect, in a possible implementation, the eighth operation is a user operation of touching-and-holding and sliding up the second task window.

According to a second aspect, this application provides an electronic device. The electronic device includes a memory and a processor. The memory is coupled to the processor. The memory is configured to store a computer program. When the processor invokes the computer program, the electronic device is enabled to perform the application management method provided in any possible implementation of any one of the foregoing aspects.

According to a third aspect, this application provides a computer-readable storage medium, including instructions. When the instructions are run on an electronic device, the electronic device is enabled to perform the application management method provided in any possible implementation of any one of the foregoing aspects.

According to a fourth aspect, this application provides a chip system. The chip system includes one or more processors. The processor is configured to invoke computer instructions, to enable an electronic device to perform the application management method provided in any possible implementation of any one of the foregoing aspects.

According to a fifth aspect, this application provides a computer program product including instructions. When the computer program product is run on an electronic device, the electronic device is enabled to perform the application management method provided in any possible implementation of any one of the foregoing aspects.

For descriptions of beneficial effects of the second aspect to the fifth aspect, refer to the descriptions of the beneficial effects of the first aspect. Details are not described herein again in this application.

### BRIEF DESCRIPTION OF DRAWINGS

FIG. 1A to FIG. 1F are diagrams of display forms of a foldable screen;
FIG. 1G is a diagram of a display form of an extension screen;
FIG. 1H to FIG. 1U are diagrams of displaying a task management center interface by an electronic device 100;
FIG. 2A to FIG. 2V are diagrams of receiving, by an electronic device 100, a user operation and managing a task window of an application that is displayed on a task management center interface;
FIG. 3A to FIG. 3G are diagrams of receiving, by an electronic device 100, a user operation and deleting a task window of an application that is displayed on a task management center interface;
FIG. 4 is a schematic flowchart of an application management method according to this application;
FIG. 5 is a diagram of a structure of an electronic device 100; and
FIG. 6 is a block diagram of a software structure of an electronic device 100 according to an embodiment of the present invention.

### DESCRIPTION OF EMBODIMENTS

The following clearly describes the technical solutions in embodiments of this application in detail with reference to the accompanying drawings. In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The terms "first" and "second" used below are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, "a plurality of" means two or more than two, unless otherwise specified.

The term "user interface (user interface, UI)" in the following embodiments of this application is a medium interface for interaction and information exchange between an application or an operating system and a user. The user interface implements conversion between an internal form of information and a form acceptable to the user. The user interface is usually represented in a form of a graphical user interface (graphical user interface, GUI), and is a user interface that is related to a computer operation and that is displayed in a graphic manner. The user interface may be a visual interface element, for example, text, an icon, a button, a menu, a tab, a text box, a dialog box, a status bar, a navigation bar, or a widget, that is displayed on a display of a wearable device.

This application provides an application management method. An electronic device may start one or more applications, and a user may view, in a task management center, the one or more started applications, and manage the one or more started applications. The one or more started applications may include an application running in the foreground, or may include an application running in the background. The application running in the foreground may be an application that has been started and whose user interface is currently displayed on the electronic device. The application running in the background may be an application that has been started and whose user interface is currently not displayed on the electronic device.

In some embodiments, the electronic device divides a task management center interface into a plurality of regions, and task windows of applications of different types are displayed in different regions, so that the user can conveniently manage the applications of different types. An application type may include but is not limited to a full-screen application, a split-screen application, a floating application, and the like. The application type may alternatively include more or fewer other types. This is not limited in this application.

The full-screen application may be an application whose user interface is displayed on a display of the electronic device in full screen. The split-screen application may be an application whose user interface is displayed in a partial display region of the display of the electronic device. The floating application may be an application whose window is displayed on the display of the electronic device, where the window may move in a display region of the display of the electronic device along with a drag operation of the user.

Optionally, when both the full-screen application and the floating application exist on the electronic device, the electronic device may divide the task management center interface into two regions: a first display region and a second display region. The first display region is used to display a task window of the full-screen application, and the second display region is used to display a task window of the floating application.

Optionally, when all of the split-screen application, the full-screen application, and the floating application exist on the electronic device, the electronic device may divide the task management center interface into three regions: a first display region, a second display region, and a third display region. The first display region is used to display a task window of the full-screen application, the second display region is used to display a task window of the floating application, and the third display region is used to display a task window of the split-screen application.

Optionally, when all of the split-screen application, the full-screen application, and the floating application exist on the electronic device, the electronic device may alternatively divide the task management center interface into two regions: a first display region and a second display region. The first display region is used to display a task window of the full-screen application and a task window of the split-screen application, and the second display region is used to display a task window of the floating application.

The display of the electronic device may be a bar-type screen, a foldable screen, a rollable screen, or the like. The foldable screen may further include a vertically foldable screen, a horizontally foldable screen, or the like. The vertically foldable screen or the horizontally foldable screen may further include an outward foldable screen, an inward foldable screen, or the like.

According to the method, the electronic device may divide the task management center interface into different regions, and task windows of applications of different types are displayed in different regions, so that the user can conveniently manage the applications of different types, to improve user experience.

First, a form of a display of an electronic device provided in this application is described.

The form of the display of the electronic device may include a bar-type display, a foldable screen, and an extension screen. The foldable screen may be further classified into an inward foldable screen, an outward foldable screen, a vertically foldable screen, and the like. In some embodiments, the foldable screen may alternatively be a bi-fold screen or the like.

A display region of the bar-type display is fixed. In some embodiments, the bar-type display may also be referred to as a vertical display. The bar-type display is in a fixed shape, and is not extensible, retractable, or foldable.

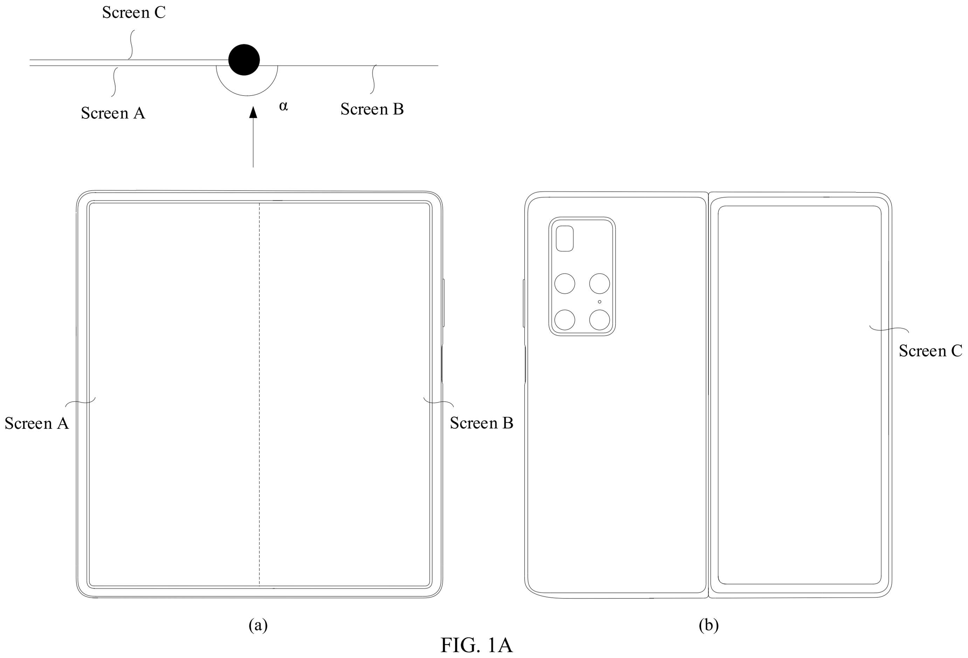

FIG. 1A to FIG. 1F are diagrams of display forms of a foldable screen.

The foldable screen may be further classified into an inward foldable screen and an outward foldable screen. A display form of the inward foldable screen and a display form of the outward foldable screen may be classified into a folded state and an unfolded state.

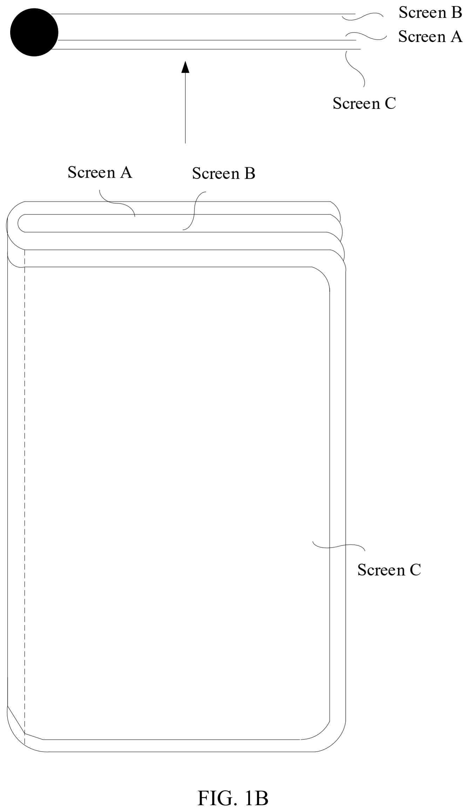

FIG. 1A and FIG. 1B are diagrams of display forms of an inward foldable screen.

FIG. 1A is a diagram of a display form of the inward foldable screen in an unfolded state.
(a) in FIG. 1A is an example front view of the inward foldable screen in the unfolded state. When the inward foldable screen is in the unfolded state, a screen, available for displaying, of the foldable screen includes a screen A, a screen B, and a screen C. The screen A and the screen B may be a complete display, or may be two independent displays. In a fully folded state, a display region in which the screen A and the screen B are located may also be referred to as a large screen, and the display region in which the screen A and the screen B are located may also be referred to as an internal screen. For example, when the inward foldable screen is in the unfolded state, an included angle α between the screen A and the screen B is greater than an angle 1 and is less than or equal to 180 degrees. For example, a value of the angle 1 may range from 170 degrees to 180 degrees. For example, when the inward foldable screen is in the unfolded/folded state, the included angle α between the screen A and the screen B may be 180 degrees.
(b) in FIG. 1A is an example rear view of the inward foldable screen in the unfolded/folded state. When the inward foldable screen is in the unfolded state, a display of the foldable screen further includes the screen C. The screen C is a display completely independent of the screen A and the screen B.

FIG. 1B is a diagram of a display form of the inward foldable screen in a folded state.

In some embodiments, the folded state of the foldable screen shown in FIG. 1B may also be referred to as a fully folded state.

The inward foldable screen may be bent in a direction in which a screen A and a screen B face each other, until the inward foldable screen is in the fully folded state.

As shown in FIG. 1B, when the inward foldable screen is in the fully folded state, a screen, available for displaying, of the inward foldable screen includes only a screen C. In the fully folded state, a display region in which the screen C is located may also be referred to as a small screen, and the display region in which the screen C is located may also be referred to as an external screen. The screen A and the screen B are hidden and invisible. In an intermediate folded state, a display region in which the screen A and the screen B are located may also be referred to as a large screen, and the display region in which the screen A and the screen B are located may also be referred to as an internal screen. An included angle α between the screen A and the screen B is greater than or equal to 0 degrees and is less than an angle 2. For example, when the inward foldable screen is in the fully folded state, the included angle α between the screen A and the screen B may be 0 degrees.

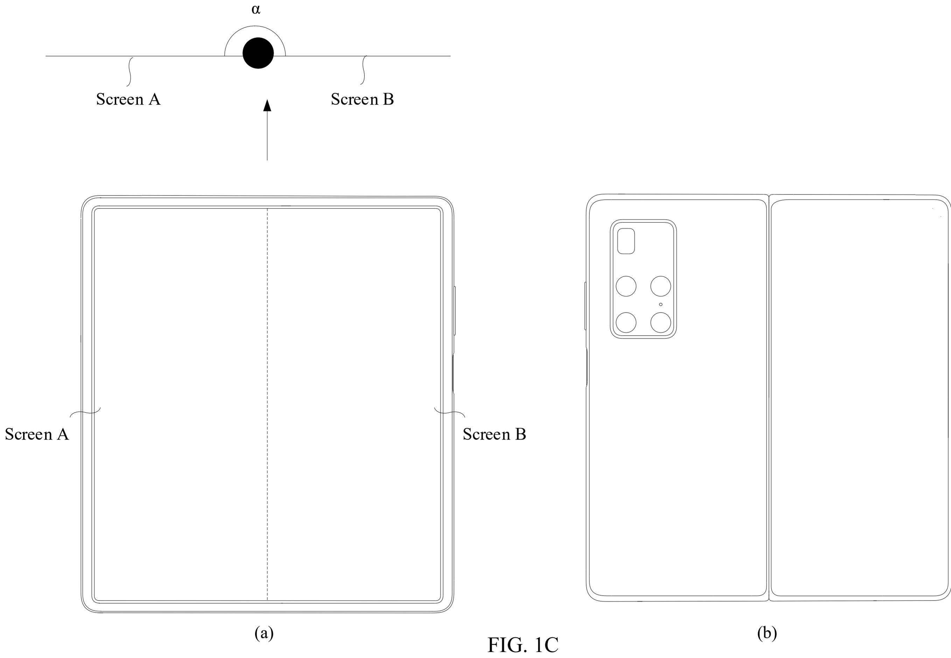

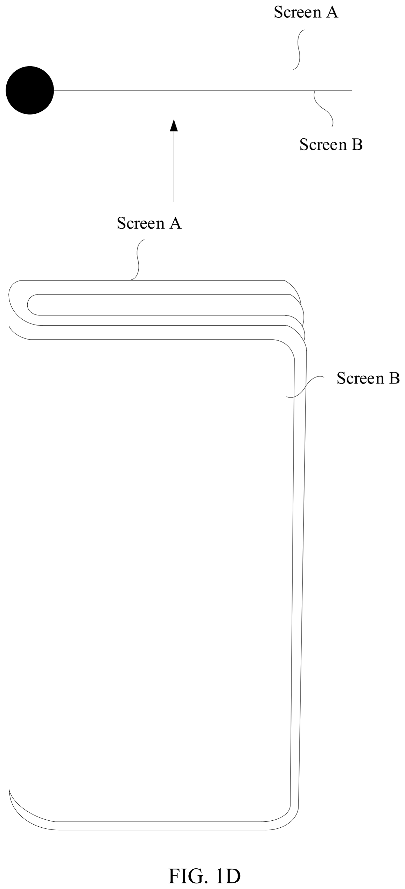

FIG. 1C and FIG. 1D are diagrams of display forms of an outward foldable screen.

FIG. 1C is a diagram of a display form of the outward foldable screen in an unfolded state.
(a) in FIG. 1C is an example front view of the outward foldable screen in the unfolded state. When the outward foldable screen is in the unfolded state, a screen, available for displaying, of the foldable screen includes a screen A and a screen B. The screen A and the screen B may be a complete display, or may be two independent displays. For example, when the inward foldable screen is in the unfolded state, an included angle α between the screen A and the screen B is greater than an angle 3 and is less than or equal to 180 degrees. For example, a value of the angle 3 may range from 170 degrees to 180 degrees. For example, if the value of the angle 3 is 180 degrees, when the outward foldable screen is in the unfolded state, the included angle α between the screen A and the screen B may be 180 degrees.
(b) in FIG. 1C is an example rear view of the outward foldable screen in the unfolded state. In comparison with the case in which the inward foldable screen is in the unfolded state, when the outward foldable screen is in the unfolded state, a display of the outward foldable screen does not include a screen C.

FIG. 1D is a diagram of a display form of the inward foldable screen in a folded state.

In some embodiments, the folded state of the foldable screen shown in FIG. 1D may also be referred to as a fully folded state.

As shown in FIG. 1D, the outward foldable screen may continue to be bent in a direction in which a screen A and a screen B face away from each other. When the outward foldable screen is in the folded state, a screen, available for displaying, of the foldable screen may be the screen B (or the screen available for displaying may be the screen A). For example, when the inward foldable screen is in the fully folded state, the screen A is in a screen-off state (or the screen B is in a screen-off state), and an included angle α between the screen A and the screen B is greater than or equal to 0 degrees and is less than an angle 4. For example, a value of the angle 4 may range from 0 degrees to 10 degrees. For example, when the outward foldable screen is in the fully folded state, the included angle α between the screen A and the screen B may be 0 degrees.

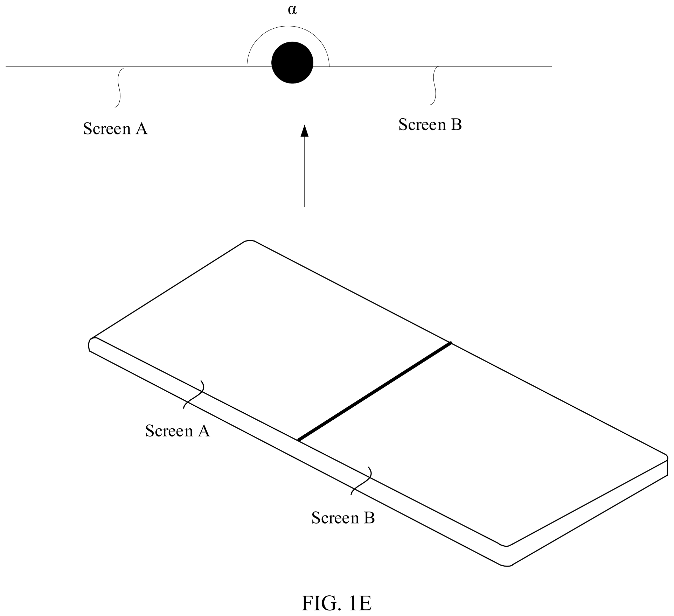

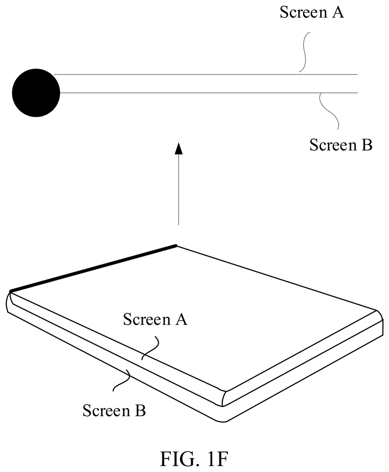

FIG. 1E and FIG. 1F are diagrams of display forms of a vertically foldable screen.

FIG. 1E is a diagram of a display form of the vertically foldable screen in an unfolded state. When the vertically foldable screen is in the unfolded state, a screen, available for displaying, of the foldable screen includes a screen A and a screen B. The screen A and the screen B may be a complete display, or may be two independent displays. For example, when the inward foldable screen is in the unfolded state, an included angle α between the screen A and the screen B is greater than an angle 3 and is less than or equal to 180 degrees. For example, a value of the angle 3 may range from 170 degrees to 180 degrees. For example, if the value of the angle 3 is 180 degrees, when the outward foldable screen is in the unfolded state, the included angle α between the screen A and the screen B may be 180 degrees.

FIG. 1F is a diagram of a display form of the vertically foldable screen in a folded state.

In some embodiments, the folded state of the vertically foldable screen shown in FIG. 1F may also be referred to as a fully folded state.

As shown in FIG. 1F, the vertically foldable screen may be bent in a direction in which a screen A and a screen B face each other. When the outward foldable screen is in the folded state, the screen A and the screen B of the vertically foldable screen are hidden and invisible. For example, when the vertically foldable screen is in the fully folded state, both the screen A and the screen B are in a screen-off state, and an included angle α between the screen A and the screen B is greater than or equal to 0 degrees and is less than an angle 4. For example, a value of the angle 4 may range from 0 degrees to 10 degrees. For example, when the vertically foldable screen is in the fully folded state, the included angle α between the screen A and the screen B may be 0 degrees.

For example, in some embodiments, the vertically foldable screen may further include a screen C. The screen C is located on a rear side of the screen A or the screen B. When the vertically foldable screen is in the unfolded state, the screen C is in a screen-off state. When the vertically foldable screen is in the folded state, the screen C is in a screen-on state.

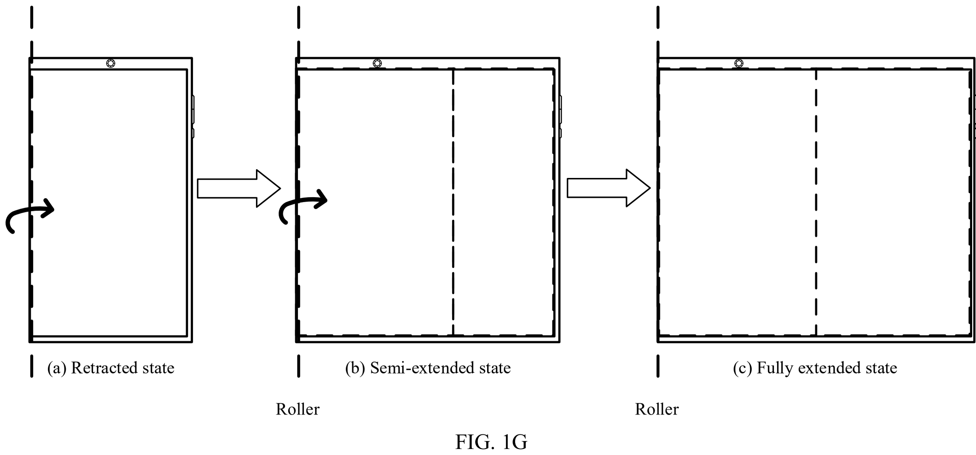

FIG. 1G is a diagram of a display form of an extension screen.

In some cases, the extension screen may also be referred to as a rollable screen. The rollable screen of the electronic device may be extended or retracted in a direction perpendicular to a roller, to change a screen length, in the direction perpendicular to the roller, of the rollable screen.

A form of the rollable screen may be divided into a retracted state, a semi-extended state, and a fully extended state. (a) in FIG. 1G is a diagram of the rollable screen in the retracted state. When the rollable screen is in the retracted state, a part of a screen of the rollable screen is hidden in a body of the electronic device, and the electronic device may display an interface of an application on another extended part of the screen. In this case, a screen length is a length 1. The part, hidden in the body, of the screen of the rollable screen may be extended in a specified direction (for example, a direction indicated by an arrow in the figure). When the screen of the rollable screen is not fully extended, the rollable screen is in the semi-extended state, as shown in (b) in FIG. 1G. When the rollable screen is in the semi-extended state, the part, hidden in the body, of the screen of the rollable screen is reduced, and a part, exposed on a surface of the body, of the screen increases, until the entire rollable screen is exposed on the surface of the body. When the entire rollable screen is exposed on the surface of the body, the rollable screen is in the fully extended state, as shown in (c) in FIG. 1G. In this case, a screen length is a length 2. The length 2 is greater than the length 1. It can be understood that, when a screen length is greater than the length 1 and is less than the length 2, the rollable screen is in the semi-extended state.

It should be noted that, in this embodiment of this application, the screen of the rollable screen may be extended in a first direction perpendicular to the roller, to switch from the retracted state to the fully extended state through the semi-extended state. Similarly, the screen of the rollable screen may alternatively be retracted in a second direction perpendicular to the roller, to switch from the fully extended state to the retracted state through the semi-extended state. The first direction is opposite to the second direction.

Optionally, the rollable screen of the electronic device is not limited to being extended horizontally to the right in a direction perpendicular to the roller. In some embodiments, the rollable screen of the electronic device may alternatively be extended horizontally to the left in a direction perpendicular to the roller.

Optionally, in some embodiments, the roller of the electronic device may alternatively be located in a horizontal direction, and the rollable screen of the electronic device may alternatively be extended up or down in a direction perpendicular to the roller. This is not limited in this embodiment of this application.

### 1. An electronic device displays a task management center interface.

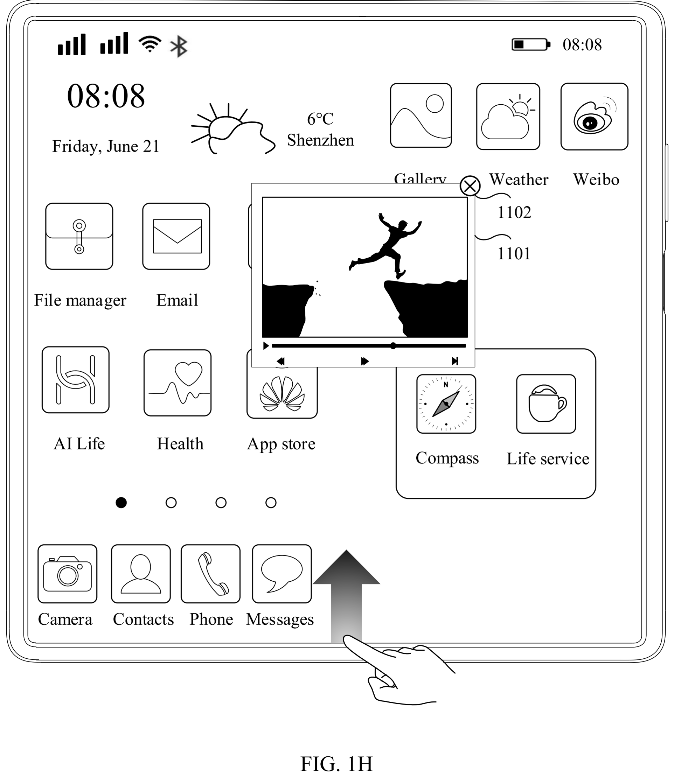

**FIG. 1H to FIG. 1U** **are diagrams of displaying a task management center interface by an electronic device 100.**

As shown in FIG. 1H, the electronic device 100 displays a floating window 1101 on a desktop, the floating window 1101 may be a floating window of a HUAWEI Video application, and video content is displayed in the floating window 1101. An option 1102 is further displayed in the floating window 1101, and a user may alternatively enable, by using the option 1102, the electronic device 100 to stop displaying the floating window 1101.

In some embodiments, the floating window 1101 may move on a display of the electronic device 100 along with a drag operation of the user.

The electronic device 100 may receive a user operation of sliding up from the bottom of the display, and display the task management center interface. A user operation that enables the electronic device 100 to display the task management center interface may alternatively be another operation. This is not limited in this application.

In some embodiments, to improve visual effect of entering the task management center interface by the electronic device 100, the electronic device 100 may play an animation before displaying the task management center interface, and display the task management center interface after the animation is played.

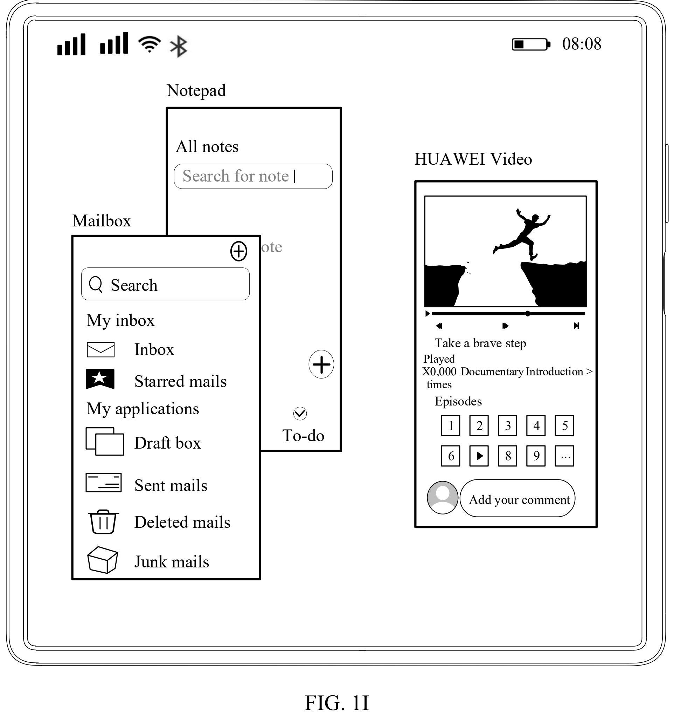

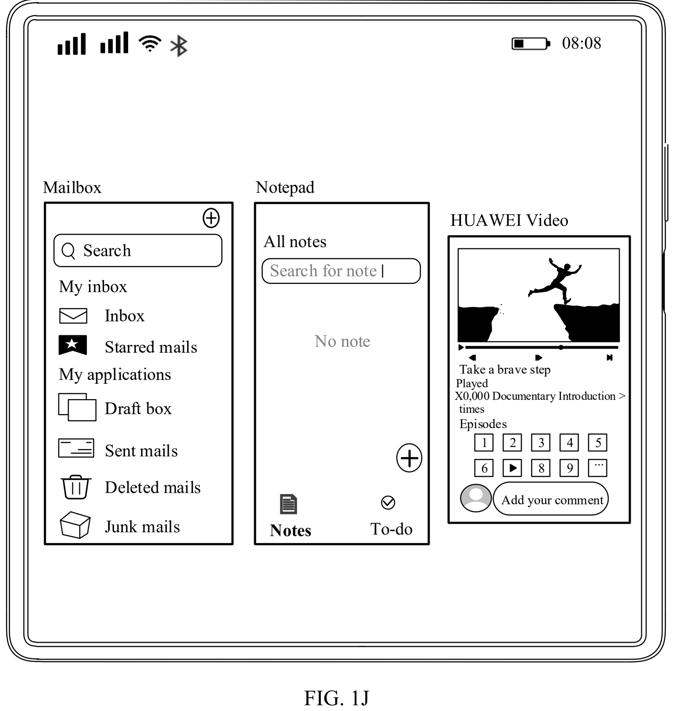

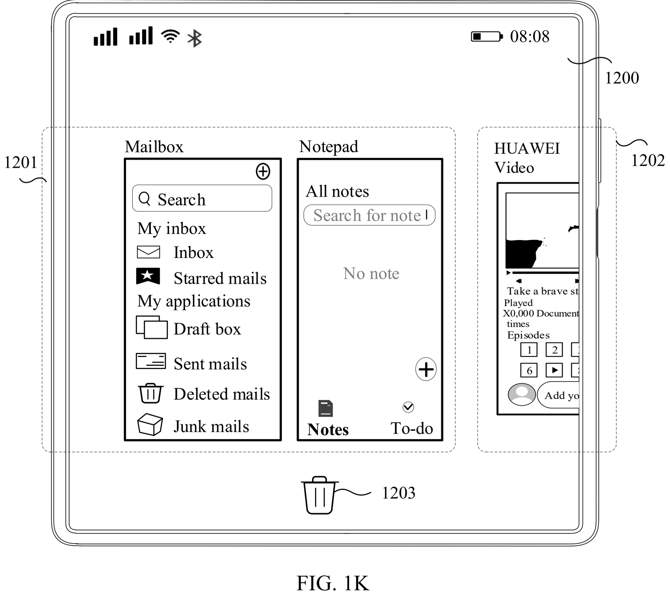

For example, as shown in FIG. 1H, the electronic device 100 may receive a user operation of sliding up from the bottom of the display by the user. In response to the user operation, the electronic device 100 may sequentially display animation frames shown in FIG. 1I and FIG. 1J, and finally display a task management center interface 1200 shown in FIG. 1K.

Optionally, FIG. 1I and FIG. 1J show only a part of animation frames of the animation, and the animation may alternatively include more other animation frames. A quantity and a display style of animation frames are not limited in this application.

Optionally, a desktop is displayed at a lower layer of the floating window 1101 shown in FIG. 1H. In another embodiment, the electronic device 100 may alternatively display another application interface (other than the desktop) at a lower layer of the floating window 1101, and the electronic device 100 may alternatively enter the task management center interface from the displayed another application interface based on a user operation.

As shown in FIG. 1K, the task management center interface 1200 includes a display region 1201 and a display region 1202. Task windows of a plurality of non-floating applications are displayed in the display region 1201. The task windows of the non-floating applications may be task windows of full-screen applications, for example, a task window of a Mailbox application and a task window of a Notepad application. Task windows of one or more floating applications, for example, a task window of the HUAWEI Video application, are displayed in the display region 1202. The user may alternatively swipe in the display region 1201 or the display region 1202 to view another undisplayed task window of a floating application.

In some embodiments, only a part of task windows may be displayed in the display region 1201 and the display region 1202. The electronic device 100 may receive a swipe operation (for example, a swipe-left operation or a swipe-right operation) performed by the user on the display region 1201 or the display region 1202, so that the electronic device 100 displays another undisplayed task window in the display region 1201 or the display region 1202.

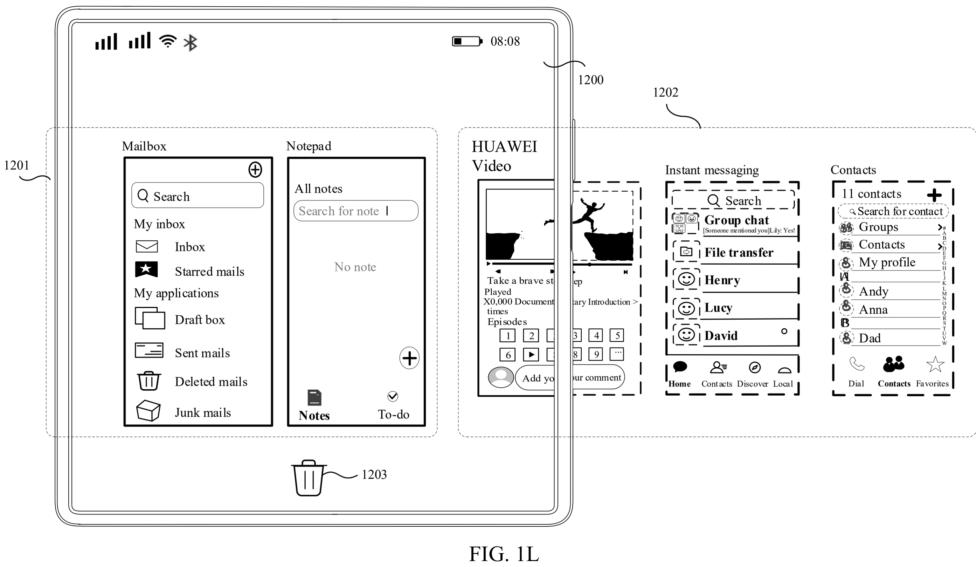

FIG. 1L shows task windows, not displayed in the display region 1202, of floating applications, for example, a task window of the HUAWEI Video application that is not fully displayed, a task window of an Instant messaging application, and a task window of a Contacts application.

Optionally, task windows, displayed in the display region 1202, of a plurality of floating applications may be sequentially sorted based on last moments at which the user performs operations on the floating applications. For example, task windows, displayed from left to right in the display region 1202, of a plurality of floating applications may be sorted in descending order of last moments at which the user performs operations on the floating applications. A last moment at which the user performs an operation on the HUAWEI Video application is closest to current time. The last moment at which the user performs the operation on the HUAWEI Video application is later than a last moment at which the user performs an operation on the Instant messaging application. The last moment at which the user performs the operation on the Instant messaging application is later than a last moment at which the user performs an operation on the Contacts application.

Optionally, task windows, displayed in the display region 1201, of a plurality of non-floating applications may also be sequentially sorted based on last moments at which the user performs operations on the non-floating applications.

In some embodiments, a task window of a split-screen application may be further displayed in the display region 1201.

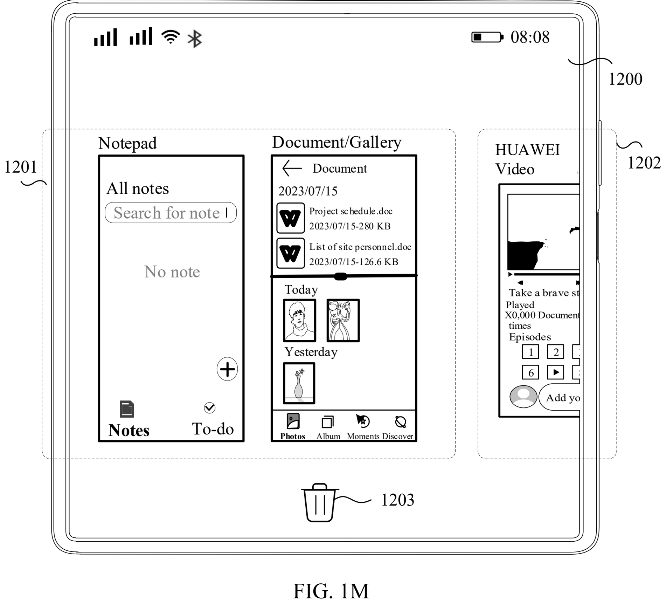

As shown in FIG. 1M, a task window of a full-screen application, for example, a task window of the Notepad application, is displayed in the display region 1201; and a task window of a split-screen application, for example, a task window of a Document application and a task window of a Gallery application, is also displayed in the display region 1201. The task window of the Document application and the task window of the Gallery application are also in a split-screen display state in the display region 1201. For example, the task window of the Document application is located above the task window of the Gallery application.

In some embodiments, alternatively, no task window of a full-screen application is displayed in the display region 1201, and only a task window of a split-screen application is displayed.

In some embodiments, a task window of a full-screen application and a task window of a split-screen application may alternatively be displayed in different display regions of the task management center interface.

Optionally, to distinguish between a task window of a non-floating application and a task window of a floating application, a window style of a task window, displayed on the task management center interface, of a non-floating application may be different from a window style of a task window of a floating application, to indicate, to the user, specific windows that are task windows of non-floating applications and specific windows that are task windows of floating applications. For example, the window style may include but is not limited to one or more of the following: a window size, a window shape, a window color, window transparency, window corner rounding, and the like.

Optionally, task windows of M floating applications may be displayed in the display region 1202, where M is a positive integer greater than or equal to 1; and task windows of N non-floating applications may be displayed in the display region 1201, where N is a positive integer greater than or equal to 1. M and N may be the same or different.

The task management center interface 1200 further includes an option 1203, and the option 1203 is used to delete one or more task windows displayed on the task management center interface 1200.

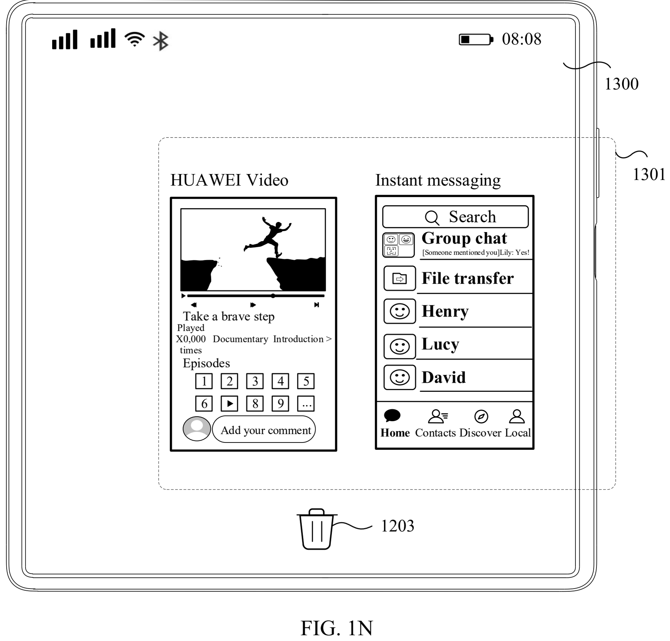

In some embodiments, the electronic device 100 may alternatively start only a floating application. In this case, the task management center interface displays only a task window of the floating application. For example, as shown in FIG. 1N, the electronic device 100 displays a task management center interface 1300, the task management center interface 1300 includes a display region 1301, and task windows of a plurality of floating applications, for example, a task window of the HUAWEI Video application and a task window of the Instant messaging application, are displayed in the display region 1301. Optionally, a display region of a display on which the display region 1301 is located may be the same as or different from a display region of a display on which the display region 1202 is located.

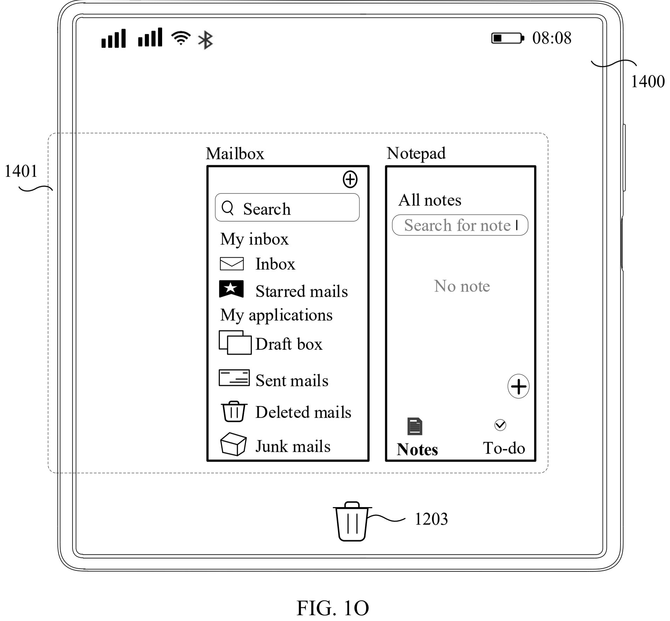

In some embodiments, the electronic device 100 may alternatively start only a non-floating application. In this case, the task management center interface displays only a task window of the non-floating application. For example, as shown in FIG. 1O, the electronic device 100 displays a task management center interface 1400, the task management center interface 1400 includes a display region 1401, and task windows of a plurality of non-floating applications, for example, a task window of the Mailbox application and a task window of the Notepad application, are displayed in the display region 1401. Optionally, a display region of a display on which the display region 1401 is located may be the same as or different from a display region of a display on which the display region 1201 is located.

FIG. 1H to FIG. 1O are diagrams of displaying the task management center interface by the electronic device 100 when the display of the electronic device 100 is a foldable screen and is in an unfolded state, or when the display of the electronic device 100 is a rollable screen and is in an extended state.

In some embodiments, the electronic device 100 may alternatively display the task management center interface when being in another form.

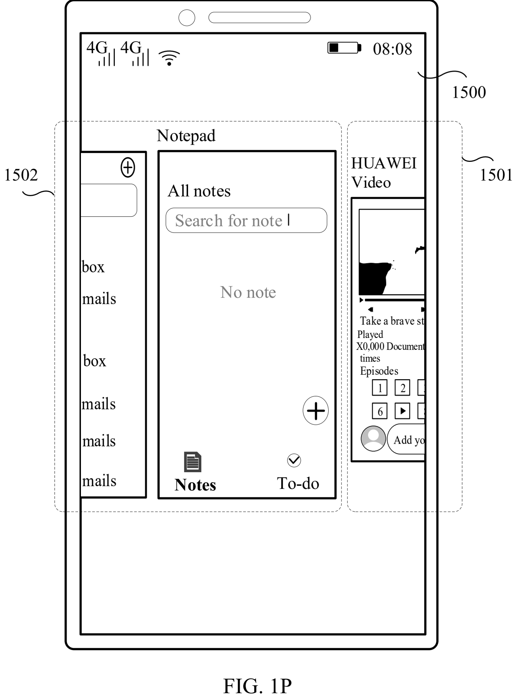

FIG. 1P is a diagram of another task management center interface.

As shown in FIG. 1P, the task management center interface 1500 includes a display region 1501 and a display region 1502. Task windows of a plurality of non-floating applications are displayed in the display region 1501. The task windows of the non-floating applications may be task windows of full-screen applications, for example, a task window of the Mailbox application and a task window of the Notepad application (not fully displayed in FIG. 1P). Task windows of one or more floating applications, for example, a task window of the HUAWEI Video application, are displayed in the display region 1502. The user may alternatively swipe in the display region 1501 or the display region 1502 to view another undisplayed task window of a floating application.

Optionally, a display of an electronic device 100 shown in FIG. 1P is a bar-type screen; or the display of the electronic device 100 is a foldable screen, and the foldable screen is in a folded state; or the display of the electronic device 100 is a rollable screen, and the rollable screen is in a retracted state.

Optionally, because a display region of the display of the electronic device 100 shown in FIG. 1P is smaller than a display region of a display of an electronic device 100 shown in FIG. 1L, an area of the display region 1501 is less than an area of the display region 1201, and an area of the display region 1502 is less than an area of the display region 1202.

In some embodiments, the electronic device 100 may display a preset quantity of floating windows in the foreground, or the electronic device 100 may display, in a sidebar display region, a task window of an application that is displayed by the electronic device 100 in the foreground.

For example, the electronic device 100 may simultaneously display two floating windows in the foreground, or the electronic device 100 may display, in the sidebar display region, a task window of an application that is run by the electronic device 100 in the foreground. The task management center interface may not only display a task window of an application that is run by the electronic device 100 in the foreground, but also display a task window of an application that is run by the electronic device 100 in the background.

Alternatively, the electronic device 100 may simultaneously display more or fewer floating windows in the foreground, without being limited to two floating windows. This is not limited in this application.

For example, if the electronic device 100 displays both a floating window A of an application A and a floating window B of an application B in the foreground, a task window of the application A and a task window of the application B may be displayed in the sidebar display region. The electronic device 100 may further receive a user operation and display a floating window C of an application C in the foreground. When the electronic device 100 can simultaneously display two floating windows in the foreground, if a last moment at which the user performs an operation on the floating window B is closer to a current moment than a last moment at which the user performs an operation on the floating window A, the electronic device 100 may stop displaying the floating window A in the foreground. The user opens a sidebar again. A task window of the application C and the task window of the application B are displayed in the sidebar. However, the task window of the application A, the task window of the application B, and the task window of the application C may be implemented on the task management center interface.

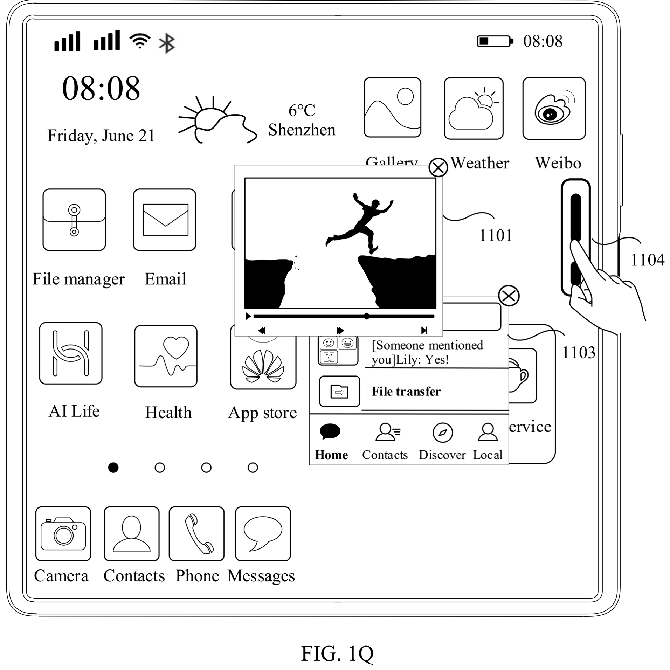

As shown in FIG. 1Q, the electronic device 100 displays a floating window 1101 and a floating window 1103 in the foreground, and the electronic device 100 further displays an option 1104. The option 1104 is used to trigger the electronic device 100 to display a sidebar display region. A task window of the HUAWEI Video application running in the foreground is displayed in the sidebar display region. The user may manage, in the sidebar display region, a floating window displayed in the foreground, for example, stop displaying one or more floating windows in the foreground.

As shown in FIG. 1Q, the floating window 1101 being located at an upper layer of the floating window 1103 indicates that time at which the user performs an operation on the floating window 1101 is later than time at which the user performs an operation on the floating window 1103. In this case, a focused window is the floating window 1101. The focused window may be a window on which the user currently can perform an operation. For example, the user may drag the floating window 1101.

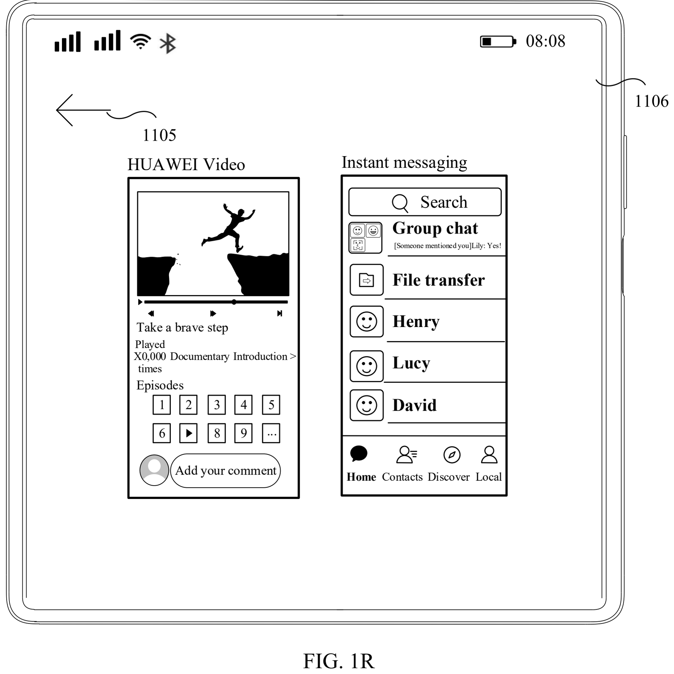

For example, as shown in FIG. 1Q, the electronic device 100 may receive an input operation (for example, tapping) of the user for the option 1104. In response to the input operation of the user, the electronic device 100 may display a user interface 1106 shown in FIG. 1R. The user interface 1106 may be a sidebar display region. The user interface 1106 displays a task window of the HUAWEI Video application and a task window of an Instant messaging application. The task window of the HUAWEI Video application may be a task window corresponding to the floating window 1101, and the task window of the Instant messaging application may be a task window corresponding to the floating window 1103. The user interface 1106 further includes an option 1105. The user may enable, by using the option 1105, the electronic device 100 to return to the desktop and display a user interface shown in FIG. 1H.

Alternatively, the electronic device 100 may display, on the task management center interface, a task window of an application running in the foreground and a task window of an application running in the background, for example, display a task window of the HUAWEI Video application and a task window of the Instant messaging application.

In some embodiments, the electronic device 100 may alternatively switch to displaying another floating window in the foreground.

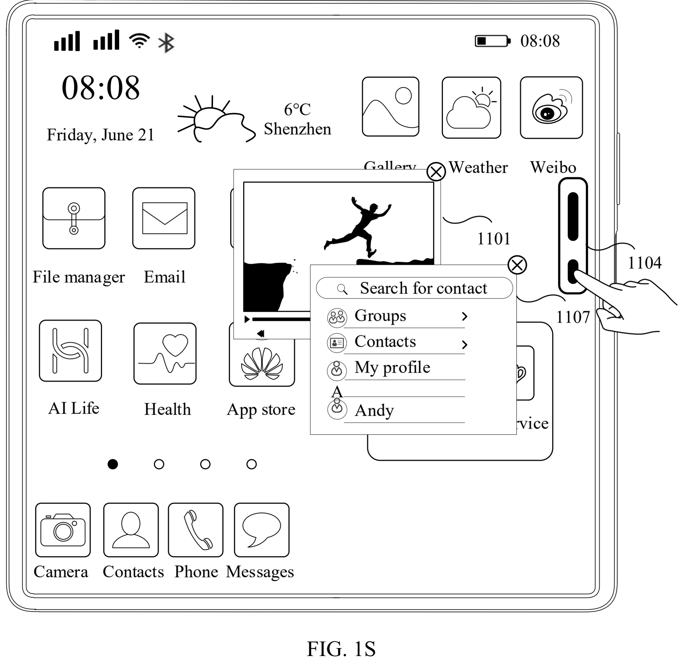

For example, as shown in FIG. 1S, the electronic device 100 may receive a user operation and display a floating window 1107 of the Contacts application in the foreground. If the electronic device 100 can simultaneously display two floating windows in the foreground, the electronic device 100 may stop displaying the floating window 1103 in the foreground, and run the Instant messaging application in the background. The electronic device 100 displays the floating window 1101 and the floating window 1107 in the foreground. As shown in FIG. 1S, the floating window 1107 being located at an upper layer of the floating window 1101 indicates that time at which the user performs an operation on the floating window 1107 is later than time at which the user performs an operation on the floating window 1101. In this case, a focused window is the floating window 1107.

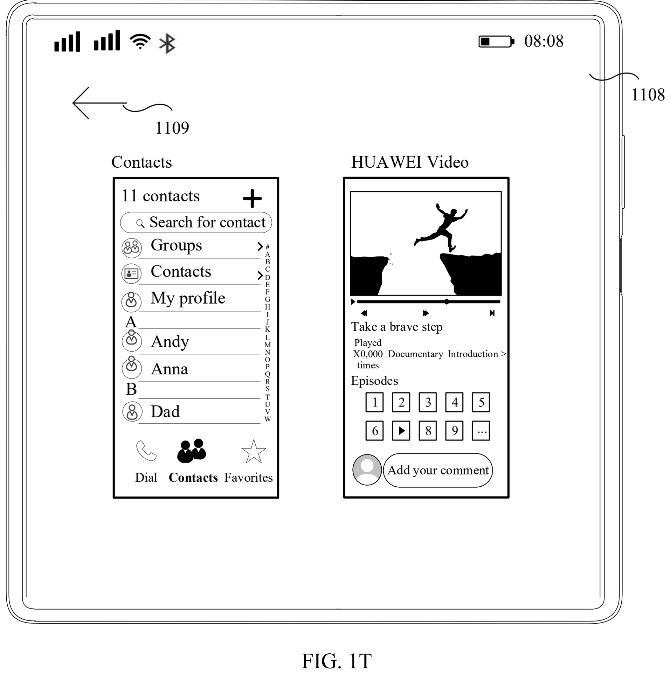

For example, as shown in FIG. 1S, the electronic device 100 may receive an input operation (for example, tapping) of the user for the option 1104. In response to the input operation of the user, the electronic device 100 may display a user interface 1108 shown in FIG. 1T. The user interface 1108 may be a sidebar display region. The user interface 1108 displays a task window of the Contacts application and a task window of the HUAWEI Video application. The task window of the Contacts application may be a task window corresponding to the floating window 1107, and the task window of the HUAWEI Video application may be a task window corresponding to the floating window 1101. The user interface 1108 further includes an option 1109. The user may enable, by using the option 1109, the electronic device 100 to return to the desktop and display a user interface shown in FIG. 1S.

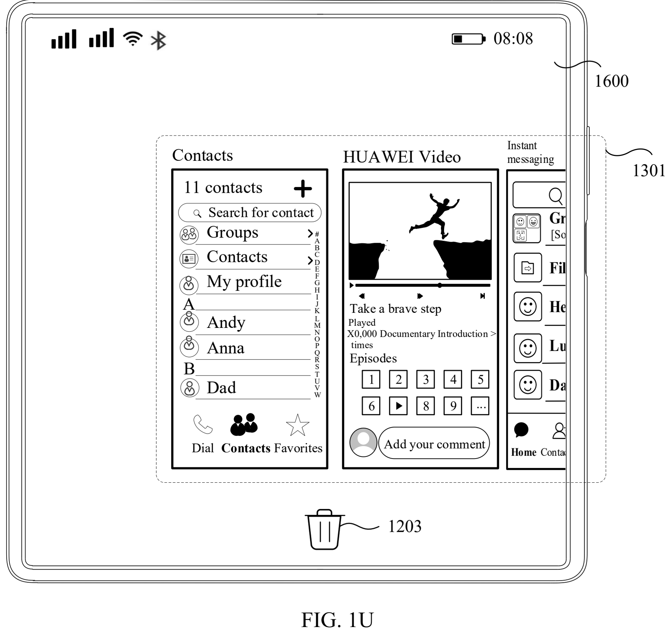

Alternatively, the electronic device 100 may display, on the task management center interface, a task window of an application running in the foreground and a task window of an application running in the background, for example, display a user interface 1600 shown in FIG. 1U. The user interface 1600 includes a display region 1301, and task windows of a plurality of applications, for example, a task window of the Contacts application, a task window of the HUAWEI Video application, and a task window of the Instant messaging application, are displayed in the display region 1301.

In some embodiments, the electronic device 100 may receive a user operation and manage a task window of an application that is displayed on the task management center interface.

### 2. Manage a task window of an application that is displayed on a task management center interface.

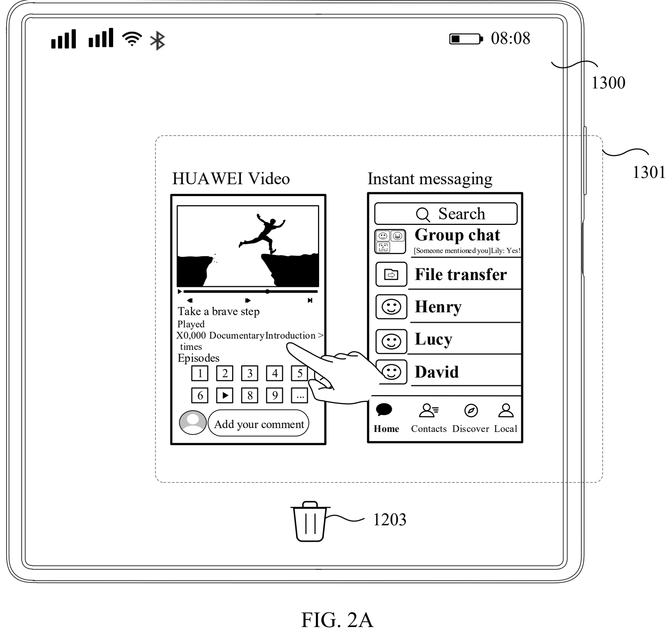

**FIG. 2A to FIG. 2V** **are diagrams of receiving, by an electronic device 100, a user operation and managing a task window of an application that is displayed on a task management center interface.**

In some embodiments, the electronic device 100 may receive an operation of a user for a task window of a floating application on the task management center interface, and display a floating window of the floating application in the foreground.

As shown in FIG. 2A, the electronic device 100 displays a user interface 1300, and the user interface 1300 may be a task management center interface. Task windows of floating applications are displayed on the user interface 1300.

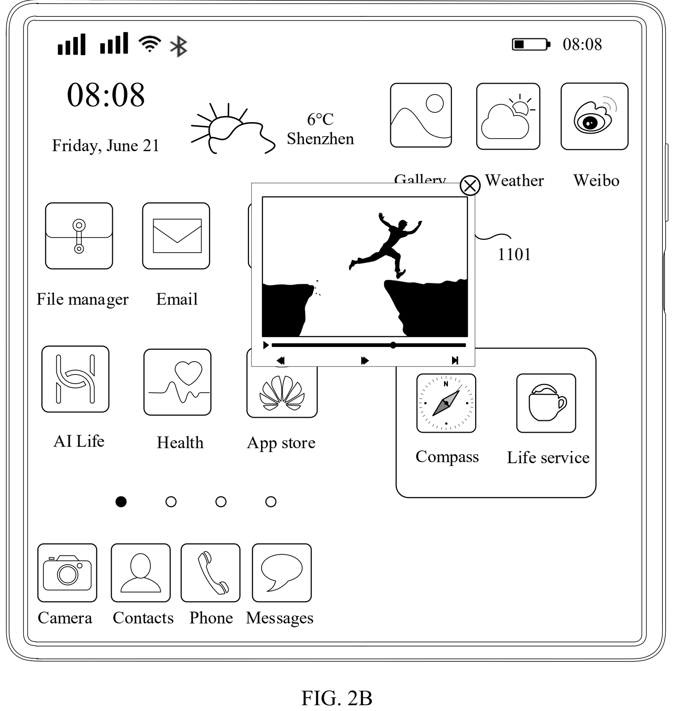

For example, as shown in FIG. 2A, the electronic device 100 may receive an input operation (for example, tapping) of the user for a task window of a HUAWEI Video application on the user interface 1300. In response to the input operation of the user, the electronic device 100 may display a user interface shown in FIG. 2B. As shown in FIG. 2B, the electronic device 100 displays a floating window 1101 in the foreground, and the floating window 1101 may be a floating window of the HUAWEI Video application.

In some embodiments, before the user selects the task window of the HUAWEI Video application, the electronic device 100 may alternatively display the floating window 1101 in the foreground, or may not display the floating window 1101 in the foreground.

In some embodiments, when the electronic device 100 can simultaneously display a plurality of floating windows in the foreground, the electronic device 100 may receive an operation of the user on the task management center interface, so that the electronic device 100 displays the plurality of floating windows in the foreground.

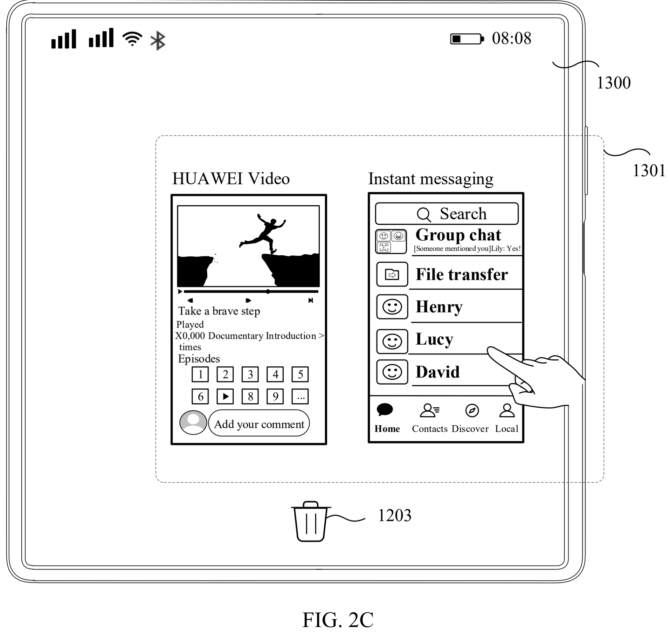

For example, as shown in FIG. 2C, the electronic device 100 receives an input operation (for example, tapping) of the user for a task window of an Instant messaging application on the user interface 1300. In response to the input operation of the user, the electronic device 100 may display, in the foreground, a floating window corresponding to the Instant messaging application.

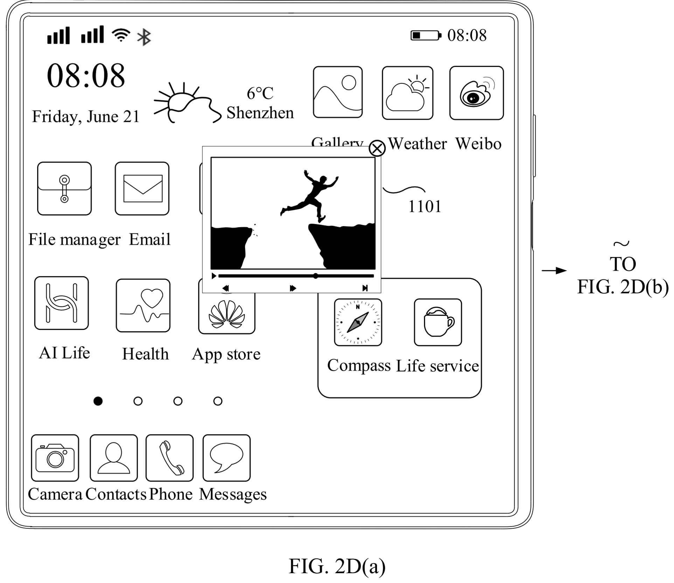

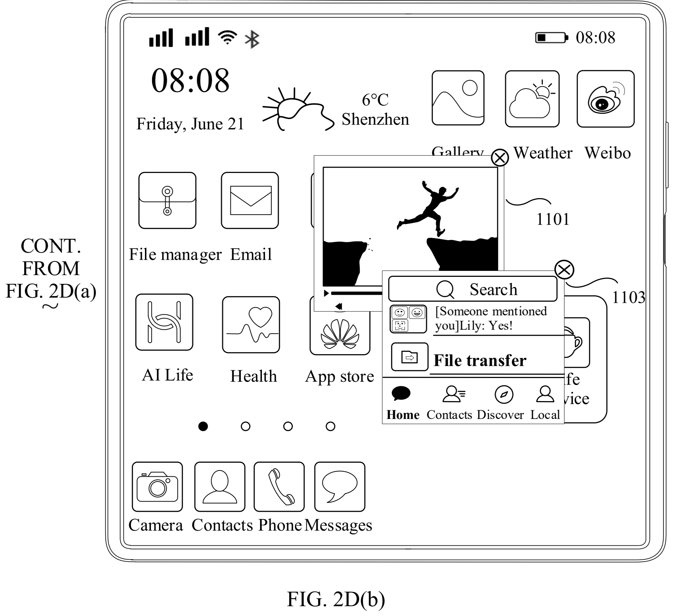

First, as shown in FIG. 2D(a), the electronic device 100 displays a floating window 1101 in the foreground. The electronic device 100 may receive a user operation and display a task management center interface, for example, display a user interface shown in FIG. 2C. Then the electronic device 100 may receive an input operation, for example, a tap operation, of the user for the task window of the Instant messaging application on the user interface 1300 shown in FIG. 2C. Finally, in response to the input operation of the user, the electronic device 100 may display a user interface shown in FIG. 2D(b). In FIG. 2D(b), the electronic device 100 may display both the floating window 1101 and a floating window 1103. In this manner, the electronic device 100 may display a plurality of floating windows in the foreground.

In some embodiments, when the electronic device 100 can simultaneously display one floating window in the foreground, the electronic device 100 may receive an operation of the user on the task management center interface, to switch to displaying different floating windows.

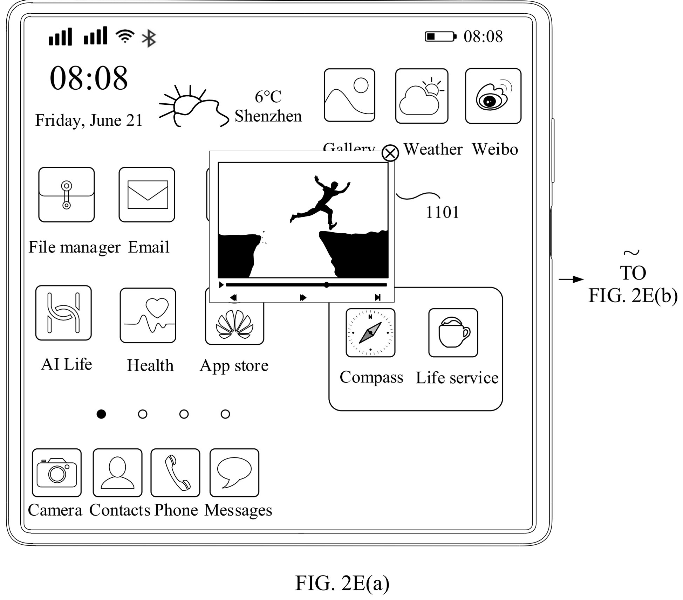

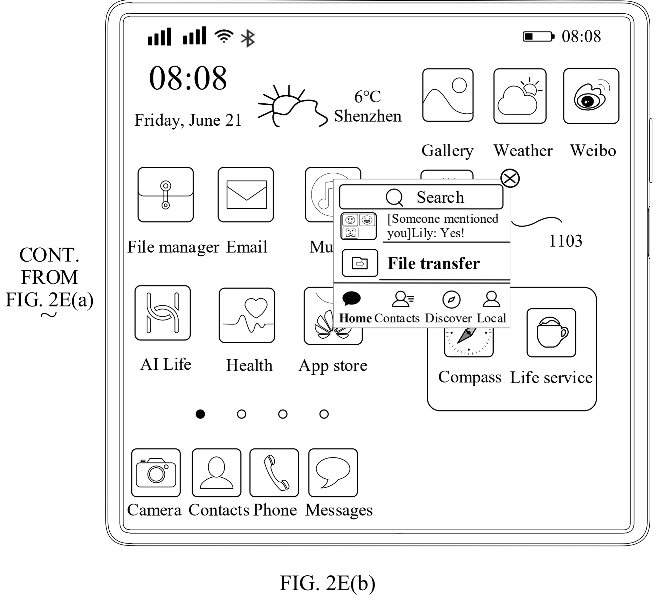

First, as shown in FIG. 2E(a), the electronic device 100 displays a floating window 1101 in the foreground. The electronic device 100 may receive a user operation and display a task management center interface, for example, display a user interface shown in FIG. 2C. Then the electronic device 100 may receive an input operation, for example, a tap operation, of the user for the task window of the Instant messaging application on the user interface 1300 shown in FIG. 2C. Finally, in response to the input operation of the user, the electronic device 100 may display a user interface shown in FIG. 2E(b). In FIG. 2E(b), the electronic device 100 stops displaying the floating window 1101, and displays a floating window 1103. In this manner, the electronic device 100 may switch to displaying different floating windows in the foreground.

In some embodiments, when the electronic device 100 can simultaneously display a plurality of floating windows in the foreground, the electronic device 100 may receive an operation of the user on the task management center interface, to switch a floating window displayed by the electronic device 100 in the foreground.

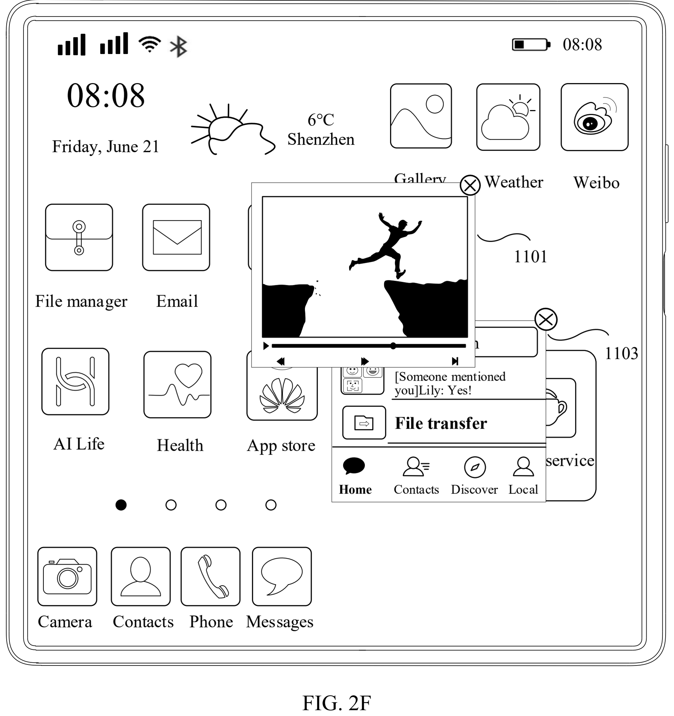

As shown in FIG. 2F, the electronic device 100 displays a floating window 1101 and a floating window 1103 in the foreground. The floating window 1101 is located at an upper layer of the floating window 1103. In other words, a current focused window is the floating window 1101. This indicates that a last moment at which the user performs an operation on the floating window 1101 is later than a last moment at which the user performs an operation on the floating window 1103. For example, the last moment at which the user performs the operation on the floating window 1101 is 10:10:20 a.m., and the last moment at which the user performs the operation on the floating window 1103 is 10:10:10 a.m.

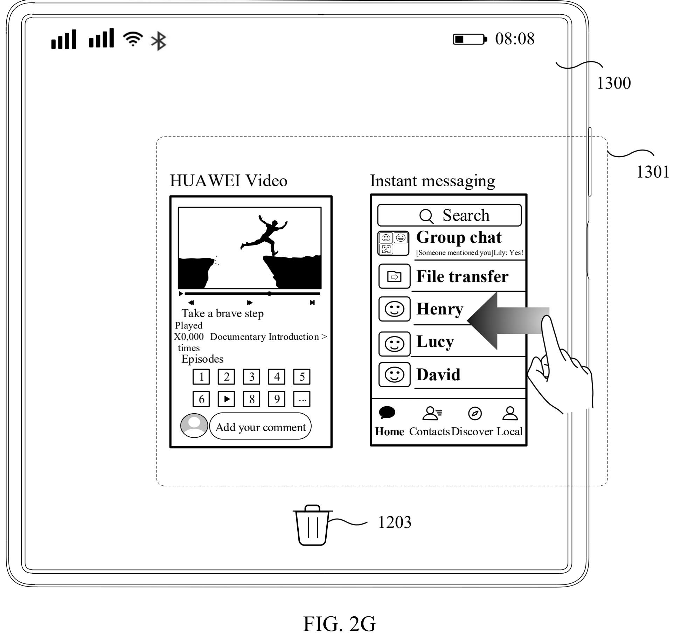

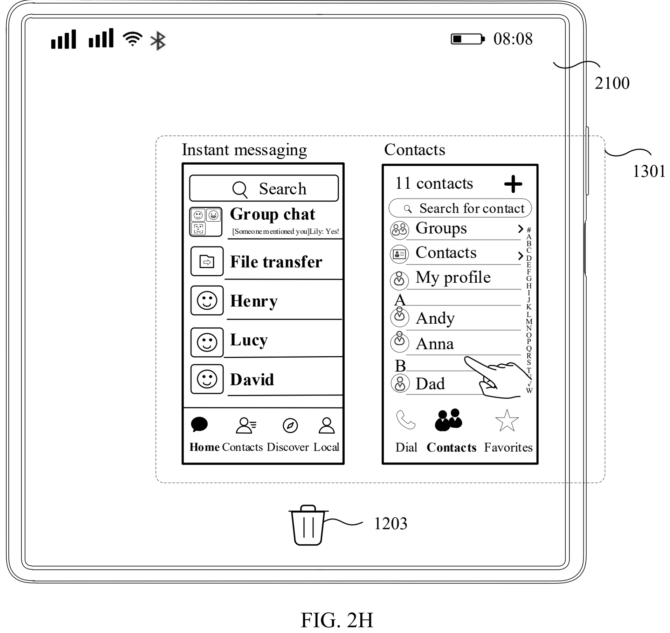

Then the electronic device 100 may receive a user operation and display a task management center interface, for example, display a user interface 1300 shown in FIG. 2G. The electronic device 100 may receive a swipe operation, for example, a swipe-left operation, performed by the user in a display region 1301. In response to the swipe operation of the user, the electronic device 100 may display another undisplayed task window of a floating application. For example, the electronic device 100 may display a user interface 2100 shown in FIG. 2H, and the user interface 2100 displays a task window of a Contacts application. The user may select the task window of the Contacts application, so that the electronic device 100 displays, in the foreground, a floating window corresponding to the Contacts application.

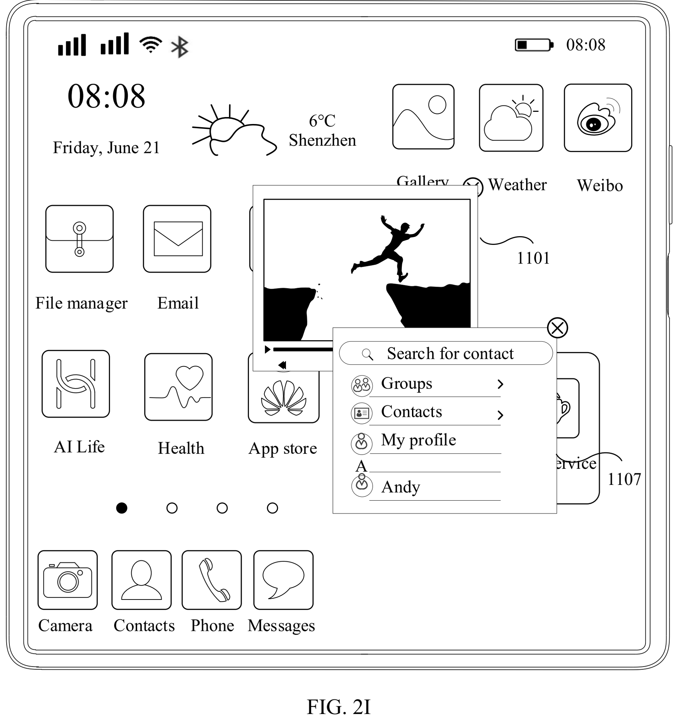

For example, as shown in FIG. 2H, the electronic device 100 may receive an input operation (for example, tapping) of the user for the task window of the Contacts application. In response to the input operation of the user, when the electronic device 100 can simultaneously display two floating windows, the electronic device 100 may display a user interface shown in FIG. 2I. A last moment at which the user performs an operation on a floating window 1101 is later than a last moment at which the user performs an operation on a floating window 1103. The electronic device 100 needs to stop displaying the floating window 1103 in the foreground, and display the floating window 1101 and a floating window 1107 in the foreground.

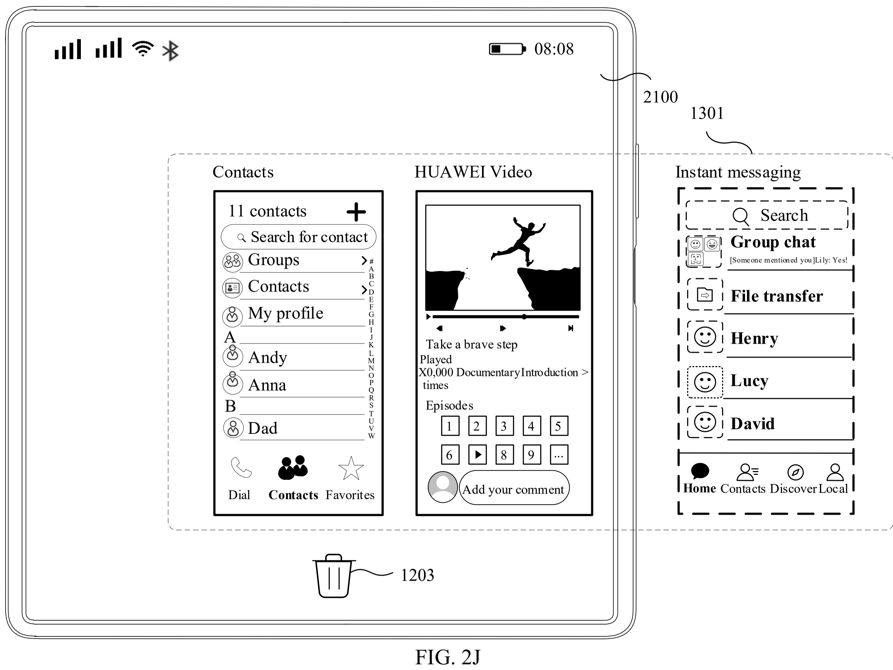

After displaying the user interface shown in FIG. 2I, the electronic device 100 may receive a user operation and display a task management center interface, for example, display a user interface shown in FIG. 2J. As shown in FIG. 2J, task windows of a plurality of floating applications, for example, a task window of the Contacts application, a task window of the HUAWEI Video application, and a task window of the Instant messaging application, are displayed in a display region 1301. A last moment at which the user performs an operation on the Contacts application is closest to a current moment. The last moment at which the user performs the operation on the Contacts application is later than a last moment at which the user performs an operation on the HUAWEI Video application. The last moment at which the user performs the operation on the HUAWEI Video application is later than a last moment at which the user performs an operation on the Instant messaging application. In the display region 1301, the task window of the Contacts application is located on a left side of the task window of the HUAWEI Video application, and the task window of the HUAWEI Video application is located on a left side of the task window of the Instant messaging application, to indicate a moment at which the user performs an operation on each floating application.

Alternatively, the electronic device 100 may simultaneously display more floating windows in the foreground, without being limited to simultaneously displaying two floating windows in the foreground. This is not limited in this application.

In some embodiments, when the electronic device 100 can simultaneously display a plurality of floating windows in the foreground, the electronic device 100 may receive an operation of the user on the task management center interface, to switch a focused window among the plurality of floating windows displayed by the electronic device 100 in the foreground.

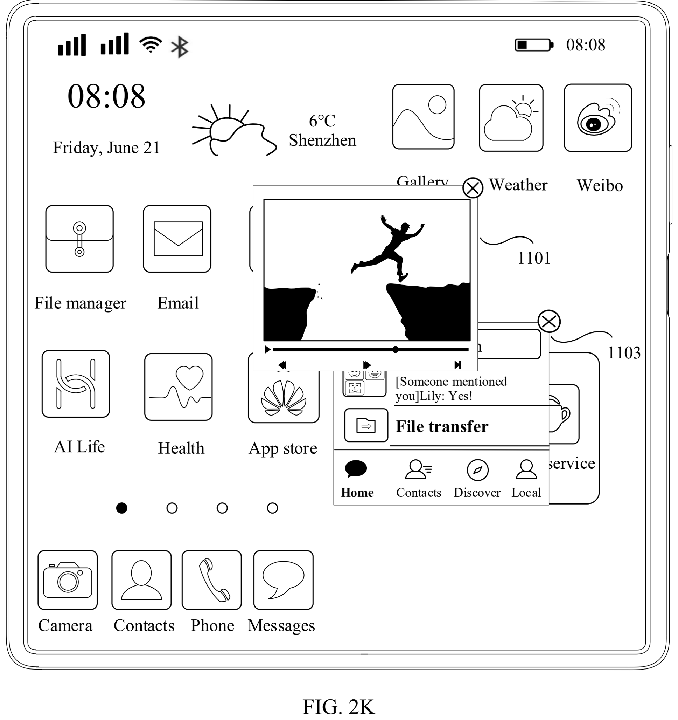

As shown in FIG. 2K, the electronic device 100 displays a floating window 1101 and a floating window 1103 in the foreground. The floating window 1101 is located at an upper layer of the floating window 1103. In other words, the floating window 1101 is a focused window. This indicates that a last moment at which the user performs an operation on the floating window 1101 is later than a last moment at which the user performs an operation on the floating window 1103. For example, the last moment at which the user performs the operation on the floating window 1101 is 10:10:20 a.m., and the last moment at which the user performs the operation on the floating window 1103 is 10:10:10 a.m.

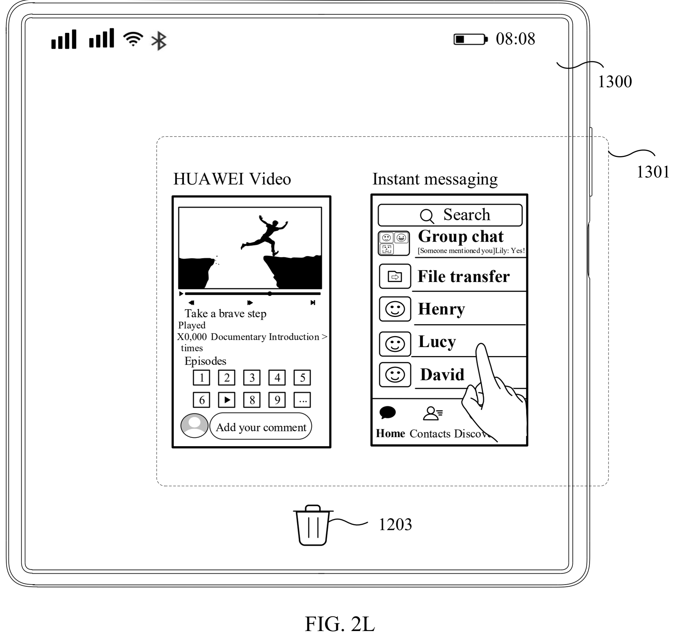

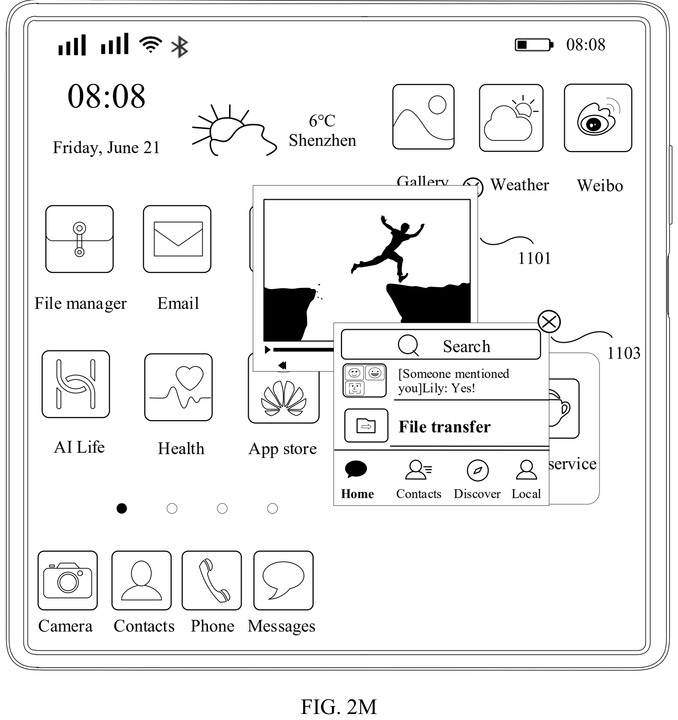

Then the electronic device 100 may receive a user operation and display a task management center interface, for example, display a user interface 1300 shown in FIG. 2L. The electronic device 100 may receive an input operation, for example, tapping, of the user for the task window of the Instant messaging application. In response to the input operation of the user, when the electronic device 100 can simultaneously display two floating windows in the foreground, the electronic device 100 may display a user interface shown in FIG. 2M. The electronic device 100 may switch a display order of the floating window 1101 and the floating window 1103, to be specific, display the floating window 1103 at an upper layer of the floating window 1101, in other words, switch the focused window to the floating window 1103, where a current focused window is the floating window 1103.

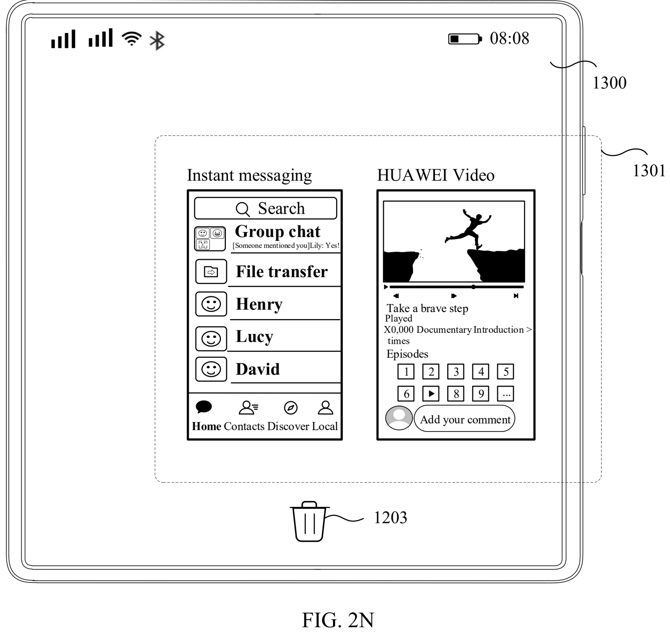

After displaying the user interface shown in FIG. 2M, the electronic device 100 may receive a user operation and display a task management center interface, for example, display a user interface shown in FIG. 2N. As shown in FIG. 2N, task windows of a plurality of floating applications, for example, a task window of the Instant messaging application and a task window of the HUAWEI Video application, are displayed in a display region 1301. A last moment at which the user performs an operation on the Instant messaging application is closest to a current moment. The last moment at which the user performs the operation on the Instant messaging application is later than a last moment at which the user performs an operation on the HUAWEI Video application. In the display region 1301, the task window of the Instant messaging application is located on a left side of the task window of the HUAWEI Video application, to indicate a moment at which the user performs an operation on each floating application.

In some embodiments, the electronic device 100 may receive and respond to an operation of the user for a task window of a non-floating application on the task management center interface, and display a user interface of the non-floating application in the foreground.

For example, in the following embodiments of this application, an example in which a non-floating application is a full-screen application is used for description. To be specific, the electronic device 100 may receive and respond to an operation of the user for a task window of a full-screen application on the task management center interface, and display a user interface of the full-screen application on a display in full screen.

Optionally, when the electronic device 100 receives and responds to an operation of the user for a task window of a split-screen application on the task management center interface, the electronic device 100 may still display a user interface of the split-screen application in a partial display region of the display, or the electronic device 100 may display a user interface of the split-screen application on the display in full screen. This is not limited in this application.

In some embodiments, before the user selects a task window of a non-floating application, the electronic device 100 may not display a floating window in the foreground.

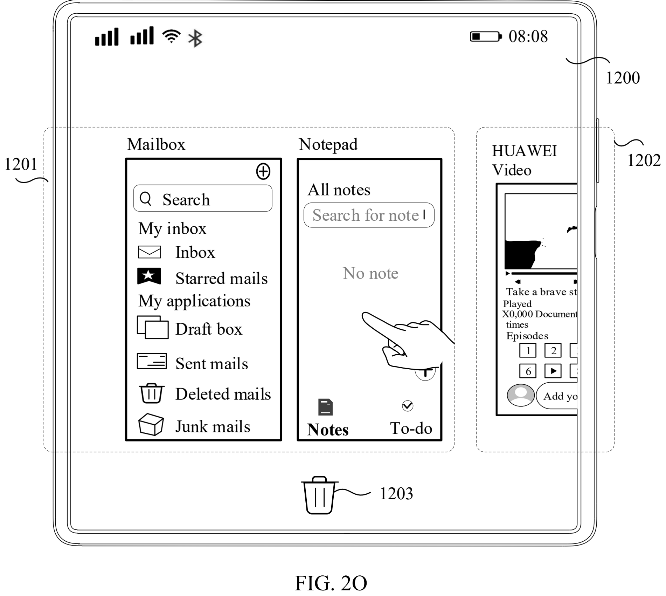

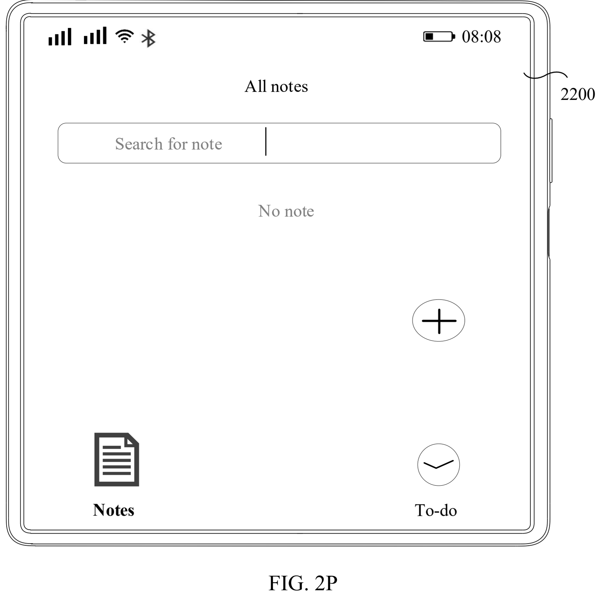

For example, as shown in FIG. 2O, the electronic device 100 may receive an input operation (for example, tapping) of the user for a task window of a Notepad application on a user interface 1200. In response to the input operation of the user, the electronic device 100 may display a user interface 2200 shown in FIG. 2P. The user interface 2200 may be a user interface of the Notepad application.

In some embodiments, before the user selects a task window of a non-floating application, the electronic device 100 may alternatively display a floating window in the foreground, for example, display a floating window 1101 shown in FIG. 1H.

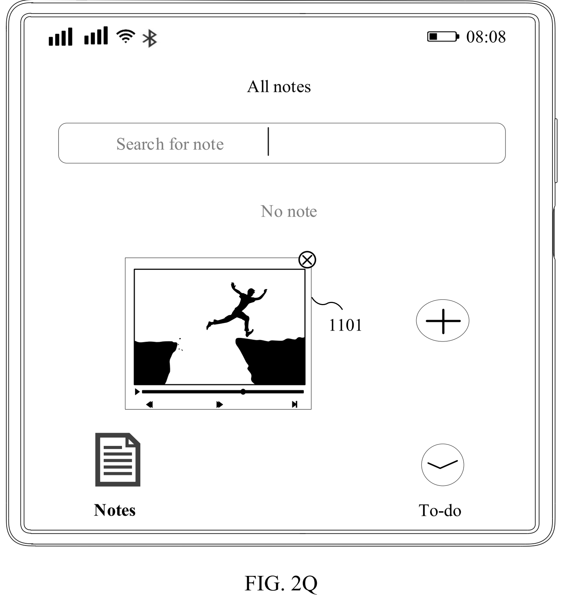

For example, in response to the input operation of the user for the task window of the Notepad application on the user interface 1200, the electronic device 100 may display a user interface shown in FIG. 2Q. The electronic device 100 may continue to display the floating window 1101 in the foreground, and the floating window 1101 is displayed at an upper layer of the user interface of the Notepad application.

In some embodiments, the electronic device 100 may receive a user operation and stop displaying an application window in the foreground, where the application window may include a floating window and/or a non-floating window.

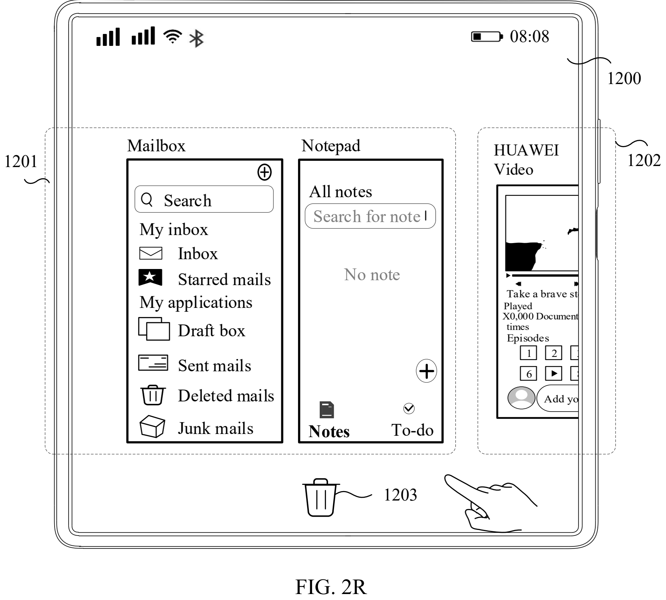

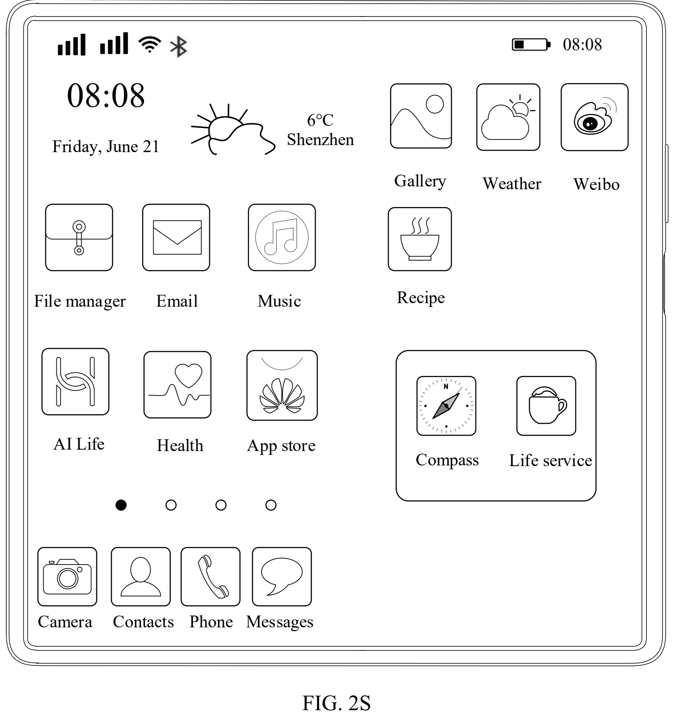

As shown in FIG. 2R, the electronic device 100 may receive an input operation (for example, tapping) of the user for a blank region on the user interface 1200. In response to the input operation of the user, the electronic device 100 displays a user interface shown in FIG. 2S. The user interface shown in FIG. 2S may also be referred to as a desktop. That is, the electronic device 100 stops displaying an application window. The application window may include a floating window or a non-floating window.

Optionally, a user operation that enables the electronic device 100 to stop displaying an application window in the foreground is not limited to an operation of tapping a blank region on the user interface 1200, and may alternatively be another operation, for example, a swipe gesture, or a touch operation for returning to the desktop. This is not limited in this application.

In some embodiments, when the electronic device 100 receives an input operation of the user for a blank region on the user interface 1200 or another operation, for example, sliding, on the user interface 1200, the electronic device 100 stops displaying the user interface 1200. However, the electronic device 100 may further continue to display a floating window and/or a non-floating window in the foreground. For example, as shown in FIG. 1H, a floating window 1101 and a desktop are displayed; or as shown in FIG. 1Q, a floating window 1101 and a floating window 1103 are displayed; or as shown in FIG. 2P, a user interface of the Notepad application is displayed; or as shown in FIG. 2Q, a floating window 1101 and a user interface of the Notepad application are displayed.

In some embodiments, the electronic device 100 may receive a user operation, to switch a floating window displayed in the foreground to the background for running, and the task management center interface further displays a task window corresponding to the floating window.

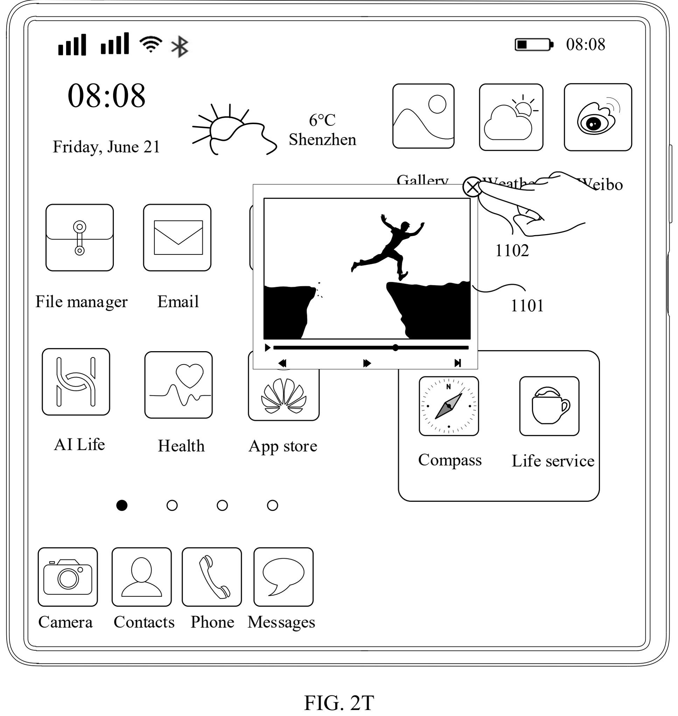

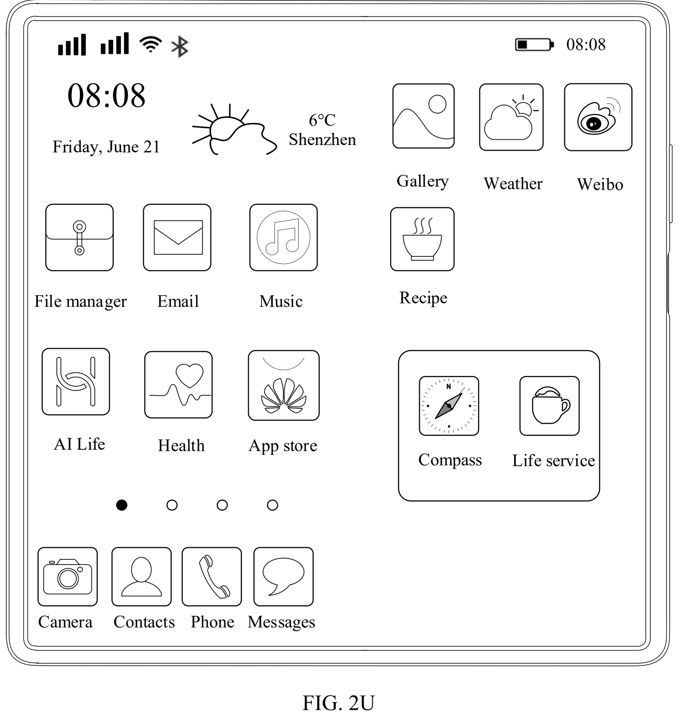

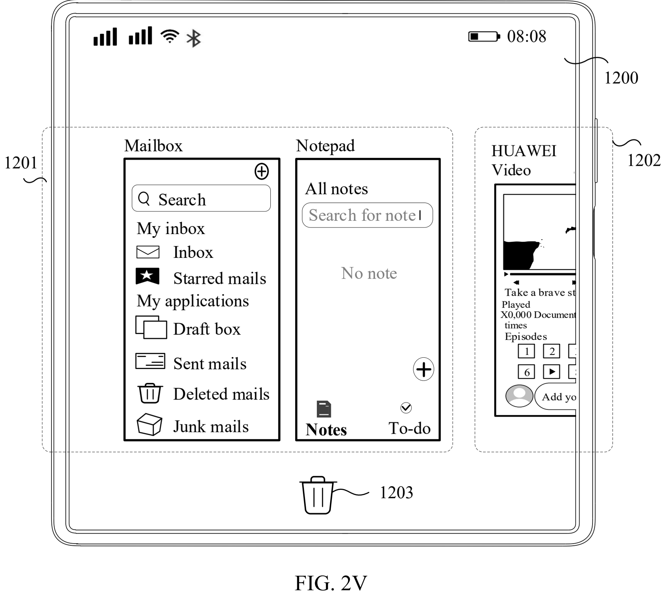

For example, as shown in FIG. 2T, the electronic device 100 displays a floating window 1101 above a desktop. The electronic device 100 may receive an input operation (for example, tapping) of the user for an option 1102 in a floating window 1101. In response to the input operation of the user, as shown in FIG. 2U, the electronic device 100 stops displaying the floating window 1101 in the foreground. However, the electronic device 100 does not close a process of the HUAWEI Video application, but runs the HUAWEI Video application in the background. After the electronic device 100 stops displaying the floating window 1101 in the foreground, for example, on a task management center interface shown in FIG. 2V, the electronic device 100 still displays a task window of the HUAWEI Video application on a user interface 1200.

### 3. Delete a task window of an application that is displayed on a task management center interface.

In some embodiments, an electronic device 100 may receive a user operation and delete a task window displayed on a task management center interface, for example, delete a task window of a floating application and/or a task window of a non-floating application.

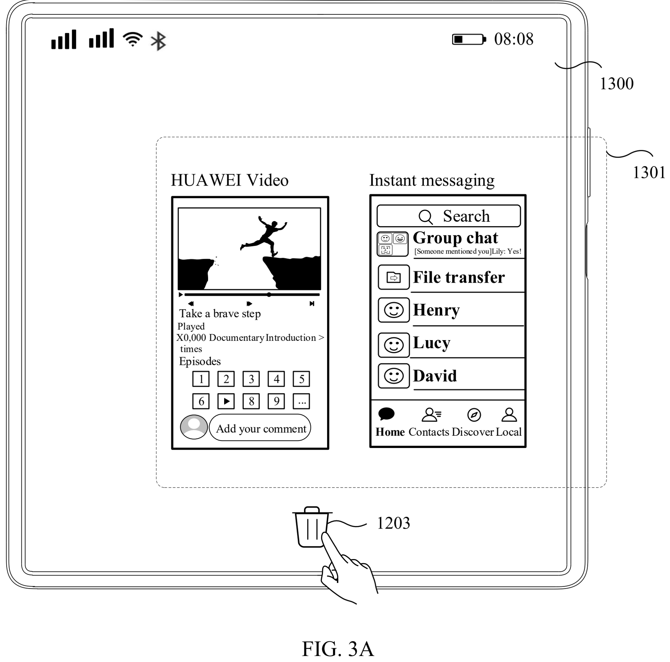

**FIG. 3A to FIG. 3G** **are diagrams of receiving, by an electronic device 100, a user operation and deleting a task window of an application that is displayed on a task management center interface.**

As shown in FIG. 3A, the electronic device 100 displays a user interface 1300, and the user interface 1300 further displays an option 1203.

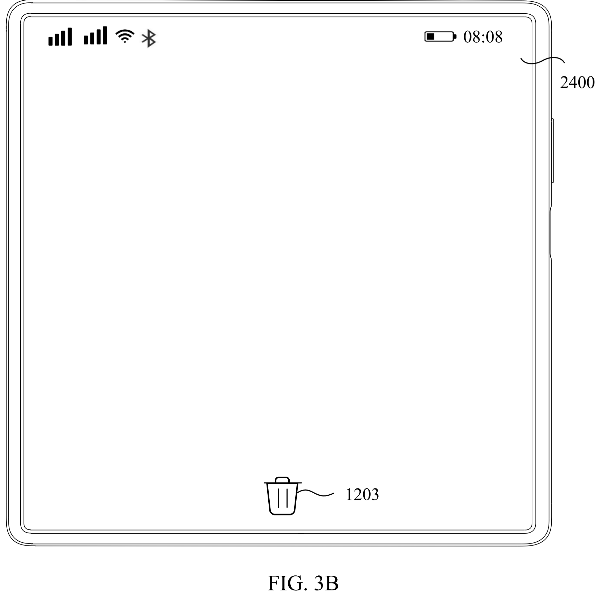

For example, as shown in FIG. 3A, the electronic device 100 may receive an input operation, for example, a tap operation, of the user for the option 1203. In response to the input operation of the user, the electronic device 100 may delete a task window of a HUAWEI Video application and a task window of an Instant messaging application on the user interface 1300, and display a user interface shown in FIG. 3B. Optionally, after the electronic device 100 deletes the task window of the HUAWEI Video application and the task window of the Instant messaging application on the user interface 1300, the electronic device 100 also stops running the HUAWEI Video application and the Instant messaging application.

In addition to deleting a task window of a floating application, the user may alternatively delete, by using the option 1203, a task window of a non-floating application that is displayed on the task management center interface.

For example, a task window of a full-screen application shown in FIG. 1O is deleted by using the option 1203. For example, the user may delete a task window of a Notepad application and a task window of a Mailbox application by using the option 1203. After the task window of the Notepad application and the task window of the Mailbox application are deleted, the electronic device 100 also stops running the Notepad application and the Mailbox application.

In addition to deleting a task window of a floating application, the user may alternatively delete, by using the option 1203, both a task window of a floating application and a task window of a non-floating application that are displayed on the task management center interface.

For example, a task window of a floating application and a task window of a non-floating application that are shown in FIG. 2V are deleted by using the option 1203. For example, the user may delete a task window of a Notepad application, a task window of a Mailbox application, and a task window of a HUAWEI Video application by using the option 1203. After the task window of the Notepad application, the task window of the Mailbox application, and the task window of the HUAWEI Video application are deleted, the electronic device 100 also stops running the Notepad application, the Mailbox application, and the HUAWEI Video application.

In the manner shown in FIG. 3A and FIG. 3B, the electronic device 100 may delete, in a "one-tap" manner based on a user operation, task windows of a plurality of applications that are displayed on the task management center interface.

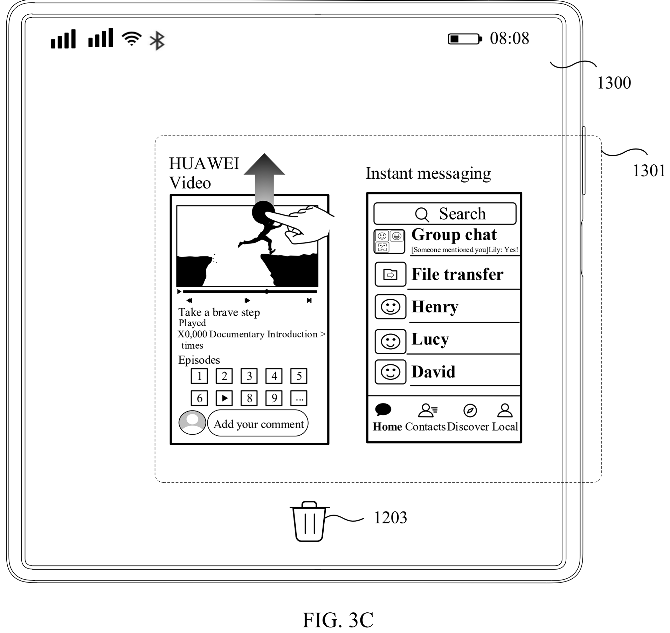

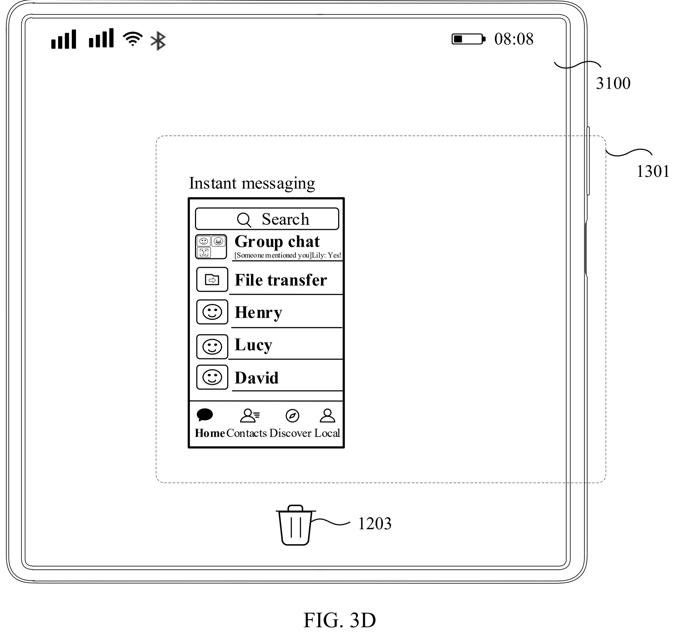

As shown in FIG. 3C, the electronic device 100 displays a user interface 1300. The electronic device 100 may receive an input operation, for example, a touch-and-hold and swipe-up operation, of the user for a task window of a HUAWEI Video application. In response to the input operation of the user, the electronic device 100 may delete the task window of the HUAWEI Video application, and display a user interface 3100 shown in FIG. 3D. As shown in FIG. 3D, the user interface 3100 includes a task window of a Contacts application. Optionally, after the electronic device 100 deletes the task window of the HUAWEI Video application, the electronic device 100 stops running the HUAWEI Video application.

In addition to deleting a task window of a floating application, the user may alternatively delete, in the manner shown in FIG. 3C and FIG. 3D, a task window of a floating application that is displayed on the task management center interface.

In the manner shown in FIG. 3C and FIG. 3D, the electronic device 100 may sequentially delete, based on a user operation, a single task window displayed on the task management center interface.

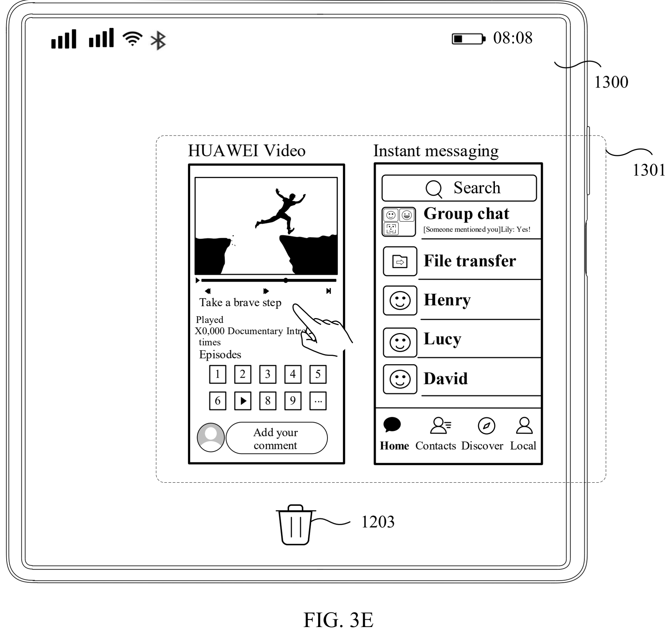

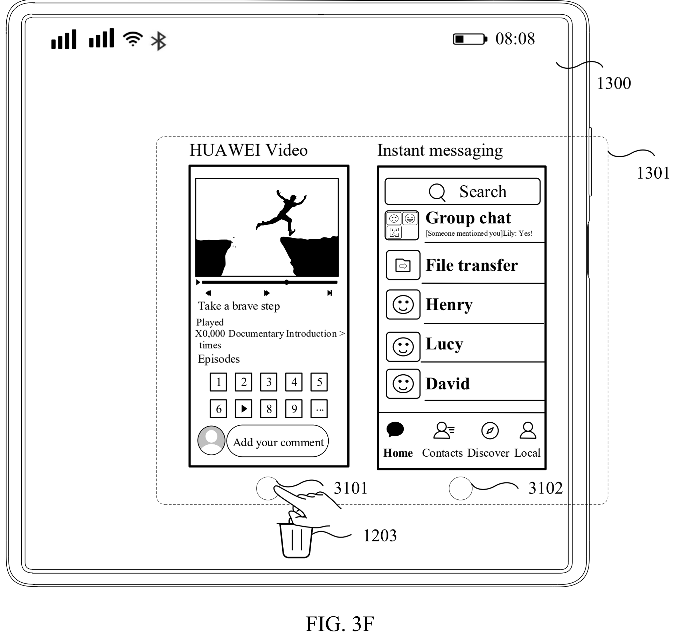

As shown in FIG. 3E, the electronic device 100 displays a user interface 1300. The electronic device 100 may receive an input operation, for example, a touch-and-hold operation, of the user for a task window of a HUAWEI Video application. In response to the input operation of the user, the electronic device 100 may display an option 3101 and an option 3102 shown in FIG. 3F. The option 3101 is used to delete the task window of the HUAWEI Video application, and the option 3102 is used to delete a task window of an Instant messaging application.

Optionally, in addition to touching-and-holding the task window of the HUAWEI Video application, the user may alternatively touch-and-hold a task window of another application, or touch-and-hold a blank region on the user interface 1300, or the like. In addition to the touch-and-hold operation, a swipe operation or the like may alternatively be performed on the task window of the HUAWEI Video application. This is not limited in this application.

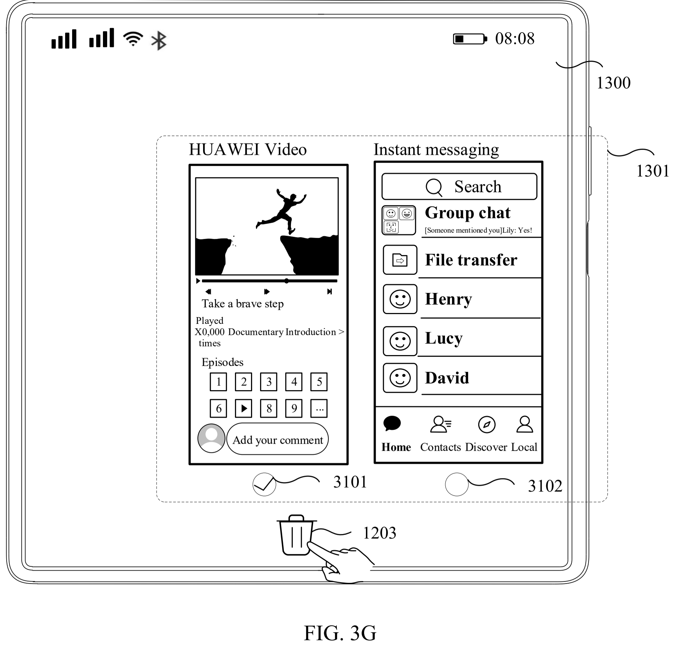

For example, as shown in FIG. 3F, the electronic device 100 may receive an input operation, for example, a select operation, of the user for the option 3101. As shown in FIG. 3G, the electronic device 100 may then receive an input operation, for example, a tap operation, of the user for an option 1203. In response to the input operation of the user, the electronic device 100 may delete the task window of the HUAWEI Video application on the user interface 1300, and display the user interface shown in FIG. 3D. Optionally, after the electronic device 100 deletes the task window of the HUAWEI Video application on the user interface 1300, the electronic device 100 closes a process of the HUAWEI Video application, and stops running the HUAWEI Video application.

In addition to deleting a task window of a floating application, the user may alternatively delete, by using the method shown in FIG. 3E to FIG. 3G, a task window of a non-floating application that is displayed on the task management center interface.

In the manner shown in FIG. 3E to FIG. 3G, the electronic device 100 may delete, based on a user operation, one or more task windows displayed on the task management center interface.

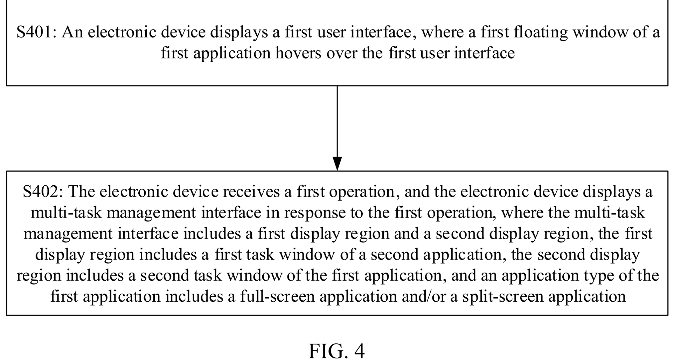

FIG. 4 is a schematic flowchart of an application management method according to this application.

S401: An electronic device displays a first user interface, where a first floating window of a first application hovers over the first user interface.

A display of the electronic device may be a bar-type screen, a foldable screen, a rollable screen, or the like. The foldable screen may further include a vertically foldable screen, a horizontally foldable screen, or the like. The vertically foldable screen or the horizontally foldable screen may further include an outward foldable screen, an inward foldable screen, or the like.

The first user interface may be a desktop, or may be an application interface in an application.

For example, the first user interface may be a desktop shown in FIG. 1H.

The first floating window may be a floating window 1101 shown in FIG. 1H.

S402: The electronic device receives a first operation, and the electronic device displays a multi-task management interface in response to the first operation, where the multi-task management interface includes a first display region and a second display region, the first display region includes a first task window of a second application, the second display region includes a second task window of the first application, and an application type of the first application includes a full-screen application and/or a split-screen application.

For example, the first operation may be a user operation, shown in FIG. 1H, of sliding up from the bottom of a display.

For example, the first display region may be a display region 1201 shown in FIG. 1K, and the second display region may be a display region 1202 shown in FIG. 1K.

For example, the first task window may be a task window of a Mailbox application or a task window of a Notepad application shown in FIG. 1K, and the second task window may be a task window of HUAWEI Video shown in FIG. 1K.

For example, the first task window may alternatively be a task window of a split-screen application or a task window of a Notepad application shown in FIG. 1M, and the split-screen application includes a Document application and a Gallery application.

For example, the first display region may alternatively be a display region 1502 shown in FIG. 1P, and the second display region may be a display region 1501 shown in FIG. 1P.

For example, the first task window may alternatively be a task window of a Notepad application shown in FIG. 1P, and the second task window may be a task window of HUAWEI Video shown in FIG. 1P.

According to the method, the electronic device may divide the multi-task management interface into two regions, and task windows of applications of different application types are displayed in different regions, so that a user can conveniently manage applications of different types on the multi-task management interface.

In a possible implementation, the first display region and the second display region do not overlap.

In a possible implementation, a window style of the first task window is different from a window style of the second task window, and the window style includes one or more of the following: a window size, a window shape, a window color, window transparency, and window corner rounding.

In a possible implementation, the first user interface includes the desktop or a user interface in a third application.

In a possible implementation, after the electronic device receives the first operation, and before the electronic device displays the multi-task management interface, the method further includes: The electronic device plays a first animation, where the first animation includes a plurality of frames of images.

In this way, after the electronic device receives a user operation and enters the multi-task management interface, and before the electronic device displays the multi-task management interface, the electronic device may play an animation, to improve visual effect for a user.

For example, the first animation may include animation frames shown in FIG. 1I and FIG. 1J.

In a possible implementation, after the electronic device displays the multi-task management interface, the method further includes: The electronic device stops displaying the first floating window.

After the electronic device displays the multi-task management interface, the electronic device may stop displaying the first floating window.

For example, as shown in FIG. 1K, after the electronic device 100 displays a task management center interface 1200, the electronic device 100 stops displaying the floating window 1101.

In some embodiments, after the electronic device displays the multi-task management interface, the electronic device may continue to make the first floating window hover over the multi-task management interface.

In a possible implementation, after the electronic device displays the multi-task management interface, the method further includes: The electronic device receives a second operation of a user for the second task window. The electronic device displays a second user interface in response to the second operation, where the first floating window hovers over the second user interface.

For example, the second task window may be a task window of HUAWEI Video shown in FIG. 2A. For details, refer to the descriptions in the embodiments of FIG. 2A and FIG. 2B.

The second user interface may be the same as or different from the first user interface.

In this way, after the electronic device displays the multi-task management interface, the electronic device may receive an operation of the user for a task window of a floating application, so that the electronic device continues to make the first floating window hover in the foreground.

In a possible implementation, the second display region further includes a third task window of the third application. After the electronic device displays the multi-task management interface, the method further includes: The electronic device receives a third operation of a user for the third task window. The electronic device displays a second user interface in response to the third operation, where the first floating window and a second floating window of the third application hover over the second user interface.

For example, the third application may be an Instant messaging application, the third task window may be a task window of an Instant messaging application shown in FIG. 2C, and the third operation may be an input operation, for example, a tap operation, for the task window of the Instant messaging application shown in FIG. 2C.

For example, the second user interface may be a desktop shown in FIG. 2D(a). The second user interface may alternatively be a user interface in another application.

For example, the second floating window is a floating window 1103 shown in FIG. 2D(b).

In this way, after the electronic device displays the multi-task management interface, the electronic device may receive an operation of the user for a task window of a floating application, so that the electronic device makes a plurality of floating windows hover in the foreground, for example, makes both the first floating window and the second floating window hover in the foreground.

In a possible implementation, the second display region further includes a third task window of the third application. After the electronic device displays the multi-task management interface, the method further includes: The electronic device receives a third operation of a user for the third task window. The electronic device displays a second user interface in response to the third operation, where a second floating window of the third application hovers over the second user interface, and the first floating window is not displayed on the second user interface.

For example, the third application may be an Instant messaging application, the third task window may be a task window of an Instant messaging application shown in FIG. 2C, and the third operation may be an input operation, for example, a tap operation, for the task window of the Instant messaging application shown in FIG. 2C.

For example, the second user interface may be a desktop shown in FIG. 2E(a). The second user interface may alternatively be a user interface in another application.

For example, the second floating window is a floating window 1103 shown in FIG. 2E(b).

In this way, after the electronic device displays the multi-task management interface, the electronic device may receive an operation of the user for a task window of a floating application, so that the electronic device switches a floating window hovering in the foreground, for example, switches the floating window hovering in the foreground from the first floating window to the second floating window.

In a possible implementation, a second floating window of the third application further hover over the first user interface, the first floating window is located above the second floating window, and the second display region further includes a third task window of the third application. After the electronic device displays the multi-task management interface, the method further includes: The electronic device receives a third operation of a user for the third task window. The electronic device displays a second user interface in response to the third operation, where the second floating window and the first floating window hover over the second user interface, and the second floating window is located above the first floating window.

For example, the third application may be an Instant messaging application shown in FIG. 2K, and the second floating window may be a floating window 1103 shown in FIG. 2K. The first floating window may be a floating window 1101 shown in FIG. 2K.

For example, that the first floating window is located above the second floating window may be that the floating window 1101 shown in FIG. 2K is located above the floating window 1103.

For example, the third task window of the third application may be a task window of an Instant messaging application shown in FIG. 2L.

For example, the third operation may be an input operation, for example, tapping, for the task window of the Instant messaging application shown in FIG. 2L.

For example, that the second floating window is located above the first floating window may be that a floating window 1103 shown in FIG. 2M is located above a floating window 1101.

In this way, after the electronic device displays the multi-task management interface, the electronic device may receive an operation of the user for a task window of a floating application, so that the electronic device switches a focused floating window hovering in the foreground. The focused floating window is a floating window on which the user currently can perform an operation, for example, moving the focused floating window.

In a possible implementation, a second floating window of the third application further hover over the first user interface, the first floating window is located above the second floating window, and the second display region further includes a third task window of the third application and a fourth task window of a fourth application. After the electronic device displays the multi-task management interface, the method further includes: The electronic device receives a fourth operation of a user for the fourth task window. The electronic device displays a second user interface in response to the fourth operation, where a third floating window of the fourth application and the first floating window hover over the second user interface, and the third floating window is located above the first floating window.

For example, the third application may be an Instant messaging application shown in FIG. 2F, and the second floating window may be a floating window 1103 shown in FIG. 2F. The first floating window may be a floating window 1101 shown in FIG. 2F.

For example, that the first floating window is located above the second floating window may be that the floating window 1101 shown in FIG. 2F is located above the floating window 1103.

For example, the fourth application may be a Contacts application shown in FIG. 2H, and the fourth task window of the fourth application may be a task window of the Contacts application shown in FIG. 2H.

For example, the fourth operation may be an input operation, for example, tapping, for the task window of the Contacts application shown in FIG. 2H.

For example, the third floating window of the fourth application may be a floating window 1107 shown in FIG. 2I.

For example, that the third floating window is located above the first floating window may be that the floating window 1107 shown in FIG. 2I is located above a floating window 1101.

In a possible implementation, after the electronic device displays the multi-task management interface, the method further includes: The electronic device receives a fifth operation of a user for the first task window. The electronic device displays a third user interface of the second application in response to the fifth operation.

Optionally, after the electronic device displays the third user interface of the second application, the electronic device may continue to make the first floating window hover over the third user interface. Optionally, after the electronic device displays the third user interface of the second application, the electronic device may alternatively not display the first floating window.

For example, the first task window may be a task window of a Notepad application shown in FIG. 2O. The fifth operation for the first task window may be an input operation, for example, tapping, for the task window of the Notepad application shown in FIG. 2O.

For example, the second application may be a Notepad application, and the third user interface of the second application may be a user interface 2200 shown in FIG. 2P or a user interface of a Notepad application shown in FIG. 2Q.

In a possible implementation, after the electronic device displays the multi-task management interface, the method further includes: The electronic device receives a sixth operation, where the sixth operation is a user operation for stopping displaying the multi-task management interface. The electronic device displays the desktop in response to the sixth operation. In a possible implementation, the sixth operation is an operation performed on a blank region on the multi-task management interface.

The sixth operation is not limited to the operation performed on the blank region on the multi-task management interface, and may alternatively be another operation, for example, a swipe operation performed on the multi-task management interface.

For example, the sixth operation may be an operation, shown in FIG. 2R, that is performed on a blank region on a multi-task management interface.

In this way, after the electronic device stops displaying the multi-task management interface, the electronic device may stop displaying another user interface and another floating window, and display only the desktop. Optionally, after the electronic device stops displaying the multi-task management interface, the electronic device may continue to display another user interface and/or another floating window.

In a possible implementation, after the electronic device displays the first floating window, the method further includes: The electronic device receives a seventh operation for the first floating window, where the seventh operation is a user operation for stopping making the first floating window hover over the second user interface. The electronic device continues to display the second task window in the second display region in response to the seventh operation.

For example, the seventh operation may be an input operation, for example, a tap operation, for an option 1102 in a floating window 1101 shown in FIG. 2U.

Then the electronic device may display a multi-task management center interface shown in FIG. 2V, and the multi-task management center interface further includes a task window of a HUAWEI Video application.

In this way, after the electronic device receives a user operation and stops displaying the first floating window in the foreground, the second task window of the first application is still displayed on the multi-task management interface, that is, a process of the first application is not closed.

In a possible implementation, after the electronic device displays the multi-task management interface, the method further includes: The electronic device receives an eighth operation on the second task window, where the eighth operation is a user operation for deleting the second task window. The electronic device closes a process of the second application in response to the eighth operation.

For example, the eighth operation may be an input operation, for example, a touch-and-hold and swipe-up operation, for a task window of a HUAWEI Video application shown in FIG. 3C*.*

Then the electronic device may display a multi-task management center interface shown in FIG. 3D, and the multi-task management center interface does not include a task window of a HUAWEI Video application.

In this way, after the electronic device receives a user operation and deletes the second task window on the multi-task management interface, the electronic device also closes the process of the first application.

This application provides an electronic device. The electronic device includes a memory and a processor. The memory is coupled to the processor. The memory is configured to store a computer program. When the processor invokes the computer program, the electronic device is enabled to perform the application management method provided in the embodiment of FIG. 4.

This application provides a computer-readable storage medium, including instructions. When the instructions are run on an electronic device, the electronic device is enabled to perform the application management method provided in the embodiment of FIG. 4.

This application provides a chip system. The chip system includes one or more processors. The processor is configured to invoke computer instructions, to enable an electronic device to perform the application management method provided in the embodiment of FIG. 4.

This application provides a computer program product including instructions. When the computer program product is run on an electronic device, the electronic device is enabled to perform the application management method provided in the embodiment of FIG. 4.

The following describes a hardware structure of an electronic device 100 provided in embodiments of this application.

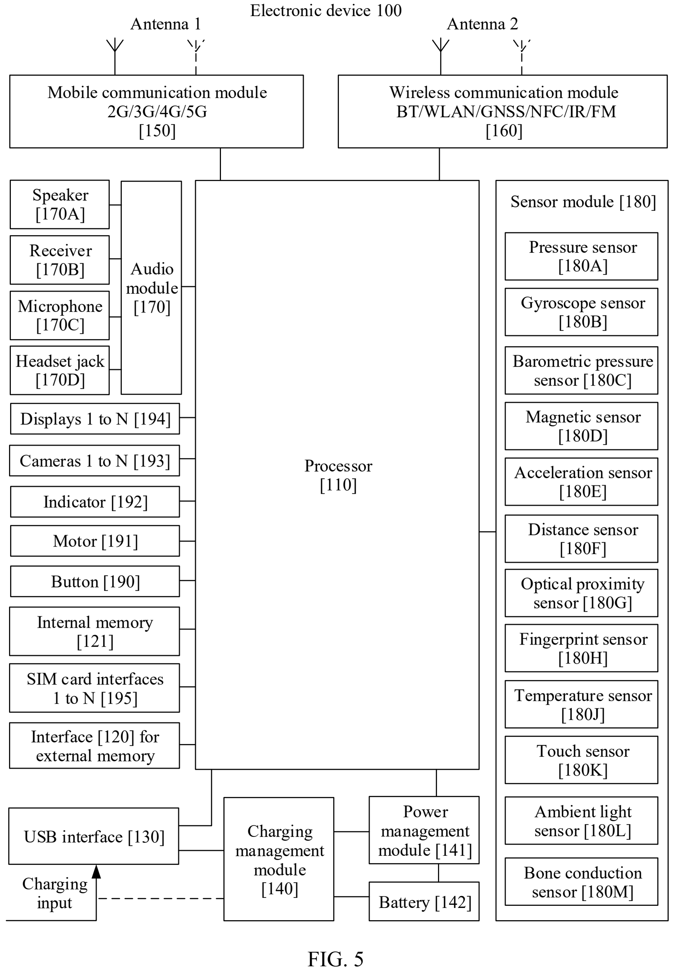

FIG. 5 is a diagram of a structure of an electronic device 100.

The electronic device 100 is used below as an example to describe embodiments in detail. It should be understood that the electronic device 100 shown in FIG. 5 is merely an example, and the electronic device 100 may include more or fewer components than those shown in FIG. 5, or two or more components may be combined, or there may be different component configurations. Components shown in FIG. 5 may be implemented in hardware that includes one or more signal processing circuits and/or application-specific integrated circuits, software, or a combination of hardware and software.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or the components may be arranged differently. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a timing signal, to control instruction fetching and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in this embodiment of the present invention is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. While charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, an antenna 1 may be reused as a diversity antenna of a wireless local area network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communications processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and luminance of the image. The ISP may further optimize parameters such as exposure and color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process other digital signals in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the electronic device 100 may be implemented through the NPU.

The interface 120 for external memory may be used for connecting an external memory card, for example, a microSD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code, and the executable program code includes instructions. The processor 110 runs the instructions stored in the internal memory 121 to implement various function applications and data processing of the electronic device 100. The internal memory 121 may include a program storage area and a data storage area. The program storage area may store an operating system, an application for at least one function (for example, a sound play function or an image play function), and the like. The data storage area may store data (for example, audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode through the speaker 170A.

The receiver 170B, also referred to as an "earpiece", is configured to convert an audio electrical signal into a sound signal. When a call is answered or a voice message is listened to through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may move the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and recognize a sound source, to implement a directional recording function and the like.

The headset jack 170D is used for connecting a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. The gyroscope sensor 180B may be configured to determine a motion attitude of the electronic device 100. The barometric pressure sensor 180C is configured to measure barometric pressure. The magnetic sensor 180D includes a Hall effect sensor. The acceleration sensor 180E may detect accelerations of the electronic device 100 in various directions (usually on three axes). When the electronic device 100 is still, a magnitude and a direction of gravity may be detected. The acceleration sensor may be further configured to recognize a posture of the electronic device, and is used in landscape/portrait mode switching or an application, for example, a pedometer. The distance sensor 180F is configured to measure a distance. The electronic device 100 may measure a distance by using infrared or laser. In some embodiments, in an image shooting scenario, the electronic device 100 may measure a distance by using the distance sensor 180F, to implement quick focusing. The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When detecting sufficient reflected light, the electronic device 100 may determine that an object exists near the electronic device 100. When detecting insufficient reflected light, the electronic device 100 may determine that no object exists near the electronic device 100. The electronic device 100 may detect, through the optical proximity sensor 180G, that a user holds the electronic device 100 close to an ear for a call, to automatically turn off a screen for power saving. The optical proximity sensor 180G may also be used in a smart cover mode or a pocket mode for automatic screen unlocking or locking. The ambient light sensor 180L is configured to sense luminance of ambient light. The electronic device 100 may adaptively adjust luminance of the display 194 based on the sensed luminance of ambient light. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect temperature. In some embodiments, the electronic device 100 executes a temperature processing policy by using the temperature detected by the temperature sensor 180J. The touch sensor 180K is also referred to as a "touch panel". The touch sensor 180K may be disposed in the display 194. The touch sensor 180K and the display 194 constitute a touchscreen, which is also referred to as a "touchscreen". The touch sensor 180K is configured to detect a touch operation performed on or near the touch sensor. The bone conduction sensor 180M may obtain a vibration signal.

The button 190 includes a power button, a volume button, and the like. The button 190 may be a mechanical button or a touch button. The electronic device 100 may receive an input on the button, and generate a button signal input related to a user setting and function control of the electronic device 100.

The motor 191 may generate a vibration prompt. The motor 191 may be configured to produce an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information reception, an alarm clock, and a game) may also correspond to different vibration feedback effects. Touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card.

A software system of the electronic device 100 may use a hierarchical architecture, an event-driven architecture, a microkernel architecture, a microservice architecture, or a cloud architecture. In embodiments of the present invention, an Android system with a hierarchical architecture is used as an example to describe a software structure of the electronic device 100.

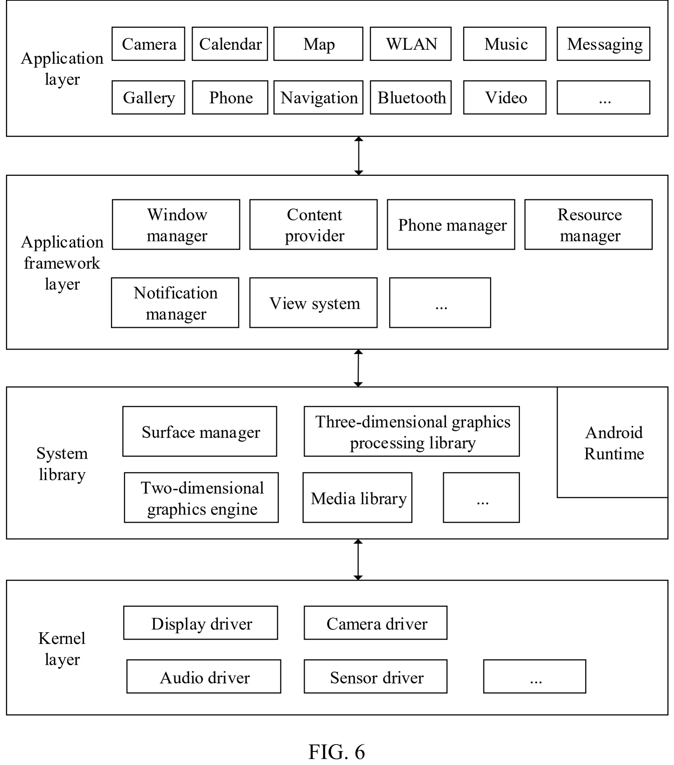

FIG. 6 is a block diagram of a software structure of an electronic device 100 according to an embodiment of the present invention.

In the hierarchical architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 6, the application packages may include applications such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 6, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, or the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on a screen in a form of a dialog window. For example, text information is displayed in the status bar, an alert tone is played, the electronic device vibrates, or an indicator blinks.

The Android runtime includes a core library and a virtual machine. The Android runtime is responsible for scheduling and management of the Android system.

The core library includes two parts: a function that needs to be invoked in Java language and a core library of Android.

The application layer and the application framework layer run in a virtual machine. The virtual machine executes Java files at the application layer and the application framework layer as binary files. The virtual machine is configured to perform functions of object lifecycle management, stack management, thread management, security and exception management, garbage collection, and the like.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It can be understood that the user interfaces described in embodiments of this application are merely example interfaces, and constitute no limitation on the solutions of this application. In other embodiments, the user interfaces may use different interface layouts or may include more or fewer controls, or other function options may be added or omitted. Provided that the user interfaces are based on a same inventive idea provided in this application, all of the user interfaces fall within the protection scope of this application.

It should be noted that, if no contradiction or conflict occurs, any features or any parts of any feature in any embodiment of this application may be combined, and a combined technical solution also falls within the scope of embodiments of this application.

In conclusion, the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. An application management method, wherein the method comprises:
displaying, by an electronic device, a first user interface, wherein a first floating window of a first application hovers over the first user interface;
receiving, by the electronic device, a first operation; and
displaying, by the electronic device, a multi-task management interface in response to the first operation, wherein the multi-task management interface comprises a first display region and a second display region, the first display region comprises a first task window of a second application, the second display region comprises a second task window of the first application, and an application type of the first application comprises a full-screen application and/or a split-screen application.

2. The method according to claim 1, wherein the first display region and the second display region do not overlap.

3. The method according to claim 1 or 2, wherein a window style of the first task window is different from a window style of the second task window, and the window style comprises one or more of the following: a window size, a window shape, a window color, window transparency, and window corner rounding.

4. The method according to any one of claims 1 to 3, wherein the first user interface comprises a desktop or a user interface in a third application.

5. The method according to any one of claims 1 to 4, wherein after receiving, by the electronic device, the first operation, and before displaying, by the electronic device, the multi-task management interface, the method further comprises:
playing, by the electronic device, a first animation, wherein the first animation comprises a plurality of frames of images.

6. The method according to any one of claims 1 to 5, wherein after displaying, by the electronic device, the multi-task management interface, the method further comprises:
stopping, by the electronic device, displaying the first floating window.

7. The method according to any one of claims 1 to 6, wherein after displaying, by the electronic device, the multi-task management interface, the method further comprises:
receiving, by the electronic device, a second operation of a user for the second task window; and
displaying, by the electronic device, a second user interface in response to the second operation, wherein the first floating window hovers over the second user interface.

8. The method according to any one of claims 1 to 6, wherein the second display region further comprises a third task window of the third application, and after displaying, by the electronic device, the multi-task management interface, the method further comprises:
receiving, by the electronic device, a third operation of a user for the third task window; and
displaying, by the electronic device, a second user interface in response to the third operation, wherein the first floating window and a second floating window of the third application hover over the second user interface.

9. The method according to any one of claims 1 to 6, wherein the second display region further comprises a third task window of the third application, and after displaying, by the electronic device, the multi-task management interface, the method further comprises:
receiving, by the electronic device, a third operation of a user for the third task window; and
displaying, by the electronic device, a second user interface in response to the third operation, wherein a second floating window of the third application hovers over the second user interface, and the first floating window is not displayed on the second user interface.

10. The method according to any one of claims 1 to 6, wherein a second floating window of the third application further hover over the first user interface, the first floating window is located above the second floating window, and the second display region further comprises a third task window of the third application; and
after displaying, by the electronic device, the multi-task management interface, the method further comprises:
receiving, by the electronic device, a third operation of a user for the third task window; and
displaying, by the electronic device, a second user interface in response to the third operation, wherein the second floating window and the first floating window hover over the second user interface, and the second floating window is located above the first floating window.

11. The method according to any one of claims 1 to 6, wherein a second floating window of the third application further hover over the first user interface, the first floating window is located above the second floating window, and the second display region further comprises a third task window of the third application and a fourth task window of a fourth application; and
after displaying, by the electronic device, the multi-task management interface, the method further comprises:
receiving, by the electronic device, a fourth operation of a user for the fourth task window; and
displaying, by the electronic device, a second user interface in response to the fourth operation, wherein a third floating window of the fourth application and the first floating window hover over the second user interface, and the third floating window is located above the first floating window.

12. The method according to any one of claims 1 to 6, wherein after displaying, by the electronic device, the multi-task management interface, the method further comprises:
receiving, by the electronic device, a fifth operation of a user for the first task window; and
displaying, by the electronic device, a third user interface of the second application in response to the fifth operation.

13. The method according to any one of claims 1 to 6, wherein after displaying, by the electronic device, the multi-task management interface, the method further comprises:
receiving, by the electronic device, a sixth operation, wherein the sixth operation is a user operation for stopping displaying the multi-task management interface; and
displaying, by the electronic device, the desktop in response to the sixth operation.

14. The method according to claim 13, wherein the sixth operation is an operation performed on a blank region on the multi-task management interface.

15. The method according to claim 7, wherein after displaying, by the electronic device, the first floating window, the method further comprises:
receiving, by the electronic device, a seventh operation for the first floating window, wherein the seventh operation is a user operation for stopping making the first floating window hover over the second user interface; and
continuing, by the electronic device, to display the second task window in the second display region in response to the seventh operation.

16. The method according to any one of claims 1 to 15, wherein after displaying, by the electronic device, the multi-task management interface, the method further comprises:
receiving, by the electronic device, an eighth operation for the second task window, wherein the eighth operation is a user operation for deleting the second task window; and
closing, by the electronic device, a process of the second application in response to the eighth operation.

17. The method according to claim 16, wherein the eighth operation is a user operation of touching-and-holding and sliding up the second task window.

18. An electronic device, wherein the electronic device comprises a memory and a processor, the memory is coupled to the processor, the memory is configured to store a computer program, and when the processor invokes the computer program, the electronic device is enabled to perform the method according to any one of claims 1 to 17.

19. A computer-readable storage medium, comprising instructions, wherein when the instructions are run on an electronic device, the electronic device is enabled to perform the method according to any one of claims 1 to 17.

20. A computer program product, comprising a computer program or instructions, wherein when the computer program or the instructions are run on an electronic device, the electronic device is enabled to perform the method according to any one of claims 1 to 17.
